# EUROPEAN PATENT APPLICATION

(11) **EP 4 787 939 A1**
(43) Date of publication of application: **05.08.2026**
(21) Application number: 23953362.3
(22) Date of filing: 25.09.2023
(51) Int. Cl.: H04W 24/10

(54) **MODEL PERFORMANCE MONITORING METHOD, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN); MU, Qin, Beijing 100085 (CN)
(74) Representative: Stöckeler, Ferdinand
(86) International application number: PCT/CN2023/121278
(87) International publication number: WO 2025/065198

(57) **Abstract**

The present invention relates to a model performance monitoring method, a device, and a storage medium. The method comprises: receiving first information sent by a network device, the first information being used for determining to perform performance monitoring on a first model. In this way, the performance of the first model can be monitored before the first model is activated, so that a more accurate prediction result can be achieved in the use process of the first model, thereby improving the performance of a network.

## Description

### TECHNICAL FIELD

The disclosure relates to the field of communication technology, and in particular to a method for model performance monitoring, a device, and a storage medium.

### BACKGROUND

With the advancement of communication technology, a prediction model based on artificial intelligence (AI) is introduced into a communication system. Prediction data in certain scenarios may be obtained via the prediction model, thus improving network performance. However, different prediction models may be applicable to different scenarios. For example, some prediction models are suitable for suburban areas, some for urban areas, some for peak hours, and some for idle hours. Thus, how to use the prediction model becomes an urgent problem to be solved.

### SUMMARY

Embodiments of the disclosure provide a method for model performance monitoring, a device, and a storage medium.

According to a first aspect of embodiments of the disclosure, a method for model performance monitoring is provided. The method includes:
receiving first information sent by a network device, in which the first information is configured to determine performance monitoring of a first model.

According to a second aspect of embodiments of the disclosure, a method for model performance monitoring is provided. The method includes:
sending first information to a terminal, in which the first information is configured to determine performance monitoring of a first model.

According to a third aspect of embodiments of the disclosure, a method for model performance monitoring is provided. The method includes:
sending, by a terminal, second information to a network device, in which the second information is configured to request performance monitoring of a first model; and
sending, by the network device, first information to the terminal, in which the first information is configured to determine performance monitoring of the first model.

According to a fourth aspect of embodiments of the disclosure, a terminal is provided, including:
a transceiver module, configured to receive first information sent by a network device, in which the first information is configured to determine performance monitoring of a first model.

According to a fifth aspect of embodiments of the disclosure, a network device is provided, including:
a transceiver module, configured to send first information to a terminal, in which the first information is configured to determine performance monitoring of a first model.

According to a sixth aspect of embodiments of the disclosure, a terminal is provided. The terminal includes: one or more processors, in which the terminal is configured to implement the method according to optional implementations of the first aspect.

According to a seventh aspect of embodiments of the disclosure, a network device is provided. The network device includes: one or more processors, in which the network device is configured to implement the method according to optional implementations of the second aspect.

According to an eighth aspect of embodiments of the disclosure, a communication system is provided. The communication system includes: a terminal, configured to implement the method according to optional implementations of the first aspect, and a network device, configured to implement the method according to optional implementations of the second aspect.

According to a ninth aspect of embodiments of the disclosure, a storage medium is provided. The storage medium stores instructions, in which the instructions, when executed on a communication device, cause the communication device to implement the method according to optional implementations of the first aspect or the second aspect.

The technical solution provided in the embodiments of the disclosure may include the following beneficial effects. The terminal receives the first information sent by the network device and determines the performance monitoring of the first model. Thus, the performance of the first model may be monitored before activating the first model, and the first model is activated when it is determined that the performance of the first model satisfies an activation condition. This may achieve more accurate prediction results during the use of the first model, thus improving the network performance.

It should be understood that the above general description and the following detailed description are only exemplary and explanatory, and do not limit embodiments of the disclosure.

### BRIEF DESCRIPTION OF THE DRAWINGS

In order to more clearly illustrate technical solutions in embodiments of the disclosure, the figures for describing the embodiments are introduced below. The following figures are merely some embodiments of the disclosure and do not specifically limit the scope of protection of the disclosure.
FIG. 1 is a schematic diagram illustrating an architecture of a communication system according to an embodiment of the disclosure.
FIG. 2A is a flowchart illustrating a method for model performance monitoring according to an embodiment of the disclosure.
FIG. 2B is a schematic diagram illustrating a time relationship according to an embodiment of the disclosure.
FIG. 2C is a schematic diagram illustrating a time relationship according to an embodiment of the disclosure.
FIG. 2D is a flowchart illustrating method for model performance monitoring according to an embodiment of the disclosure.
FIG. 2E is a flowchart illustrating a method for model performance monitoring according to an embodiment of the disclosure.
FIG. 2F is a flowchart illustrating a method for model performance monitoring according to an embodiment of the disclosure.
FIG. 2G is a flowchart illustrating a method for model performance monitoring according to an embodiment of the disclosure.
FIG. 3A is a flowchart illustrating a method for model performance monitoring according to an embodiment of the disclosure.
FIG. 3B is a flowchart illustrating a method for model performance monitoring according to an embodiment of the disclosure.
FIG. 3C is a flowchart illustrating a method for model performance monitoring according to an embodiment of the disclosure.
FIG. 3D is a flowchart illustrating a method for model performance monitoring according to an embodiment of the disclosure.
FIG. 4A is a flowchart illustrating a method for model performance monitoring according to an embodiment of the disclosure.
FIG. 4B is a flowchart illustrating a method for model performance monitoring according to an embodiment of the disclosure.
FIG. 4C is a flowchart illustrating a method for model performance monitoring according to an embodiment of the disclosure.
FIG. 5 is an interaction diagram illustrating a method for model performance monitoring according to an embodiment of the disclosure.
FIG. 6A is a block diagram illustrating a terminal according to an embodiment of the disclosure.
FIG. 6B is a block diagram illustrating a network device according to an embodiment of the disclosure.
FIG. 7A is a block diagram illustrating a communication device according to an embodiment of the disclosure.
FIG. 7B is a block diagram illustrating a chip according to an embodiment of the disclosure.

### DETAILED DESCRIPTION

Embodiments of the disclosure provide a method for model performance monitoring, a device, and a storage medium.

In a first aspect, embodiments of the disclosure provide a method for model performance monitoring. The method includes:
receiving first information sent by a network device, in which the first information is configured to determine performance monitoring of a first model.

In the above embodiments, it may be requested that the performance of the first model is monitored, before activating the first model, which may achieve more accurate prediction results during the use of the first model and improve the network performance.

In some embodiments in combination with the first aspect, in some embodiments, the method further includes:
sending second information to the network device, in which the second information is configured to request performance monitoring of the first model.

In the above embodiments, the terminal may send the second information to the network device to request performance monitoring of the first model, thus improving the flexibility of model performance monitoring.

In some embodiments in combination with the first aspect, in some embodiments, the second information includes at least one of:
a scheduling request (SR) for requesting model performance monitoring;
a first message (Msg 1) or a message A (Msg A) of a random access (RA) for requesting model performance monitoring;
a model identifier (ID) of the first model;
a functionality ID corresponding to the first model; or
first configuration information, in which the first configuration information includes a resource configuration for performing performance monitoring of the first model.

In the above embodiments, the terminal may request, from the network device, a resource configuration for performing performance monitoring of the first model, and the network device may perform the resource configuration based on the request of the terminal, thus improving the flexibility of resource configuration.

In some embodiments in combination with the first aspect, in some embodiments, the first model is a model for performing beam prediction, and the first configuration information includes at least one of:
a first reference signal resource set, in which the first reference signal resource set includes beams to be measured;
a second reference signal resource set, in which the second reference signal resource set includes beams to be predicted;
a relationship between the first reference signal resource set and the second reference signal resource set;
a first performance monitoring duration, in which the first performance monitoring duration is a duration for performance monitoring of the first model requested by a terminal; or
a first sample number, in which the first sample number is a number of samples requested by the terminal for performing performance monitoring of the first model, and the number of samples is a number of times the network device sends a reference signal resource.

In the above embodiments, resource configuration information of a beam prediction model is provided, so that the network device may accurately perform the resource configuration, thus improving the accuracy of performance monitoring.

In some embodiments in combination with the first aspect, in some embodiments, the first model is a model for performing spatial domain beam prediction, and the relationship between the first reference signal resource set and the second reference signal resource set includes at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

In the above embodiments, a relationship between a measured beam and a predicted beam corresponding to the spatial domain beam prediction model is provided, so that the network device may accurately perform the resource configuration, thus improving the accuracy of performance monitoring.

In some embodiments in combination with the first aspect, in some embodiments, the first model is a model for performing time domain beam prediction, and the relationship between the first reference signal resource set and the second reference signal resource set includes at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, in which the first time is a time at which measurement is performed on the first reference signal resource set, and the second time is a time at which prediction or measurement is performed on the second reference signal resource set.

In the above embodiments, a relationship between a measured beam and a predicted beam corresponding to the time domain beam prediction model is provided, so that the network device may accurately perform the resource configuration, thus improving the accuracy of performance monitoring.

In some embodiments in combination with the first aspect, in some embodiments, the method further includes:
receiving third information sent by the network device, in which the third information is configured to request performance monitoring of a second model; and
sending fourth information to the network device based on the third information, in which the fourth information indicates an agreement to the request of the third information.

In the above embodiments, the network device may send the third information to the terminal to request performance monitoring of the first model, thus improving the flexibility of model performance monitoring.

In some embodiments in combination with the first aspect, in some embodiments, the first information includes at least one of:
a model ID of a second model;
a functionality ID corresponding to the second model;
a third reference signal resource set, in which the third reference signal resource set includes beams to be measured;
a fourth reference signal resource set, in which the fourth reference signal resource set includes beams to be predicted;
a relationship between the third reference signal resource set and the fourth reference signal resource set;
a relationship between a third time and a fourth time, in which the third time is a time at which measurement is performed on the third reference signal resource set, and the fourth time is a time at which prediction or measurement is performed on the fourth reference signal resource set;
a second performance monitoring duration, in which the second performance monitoring duration is a duration for performance monitoring of the second model requested by the network device;
a second sample number, in which the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples included in one performance monitoring report;
a model management threshold, in which the model management threshold is configured to determine whether to activate the second model;
a physical uplink control channel (PUCCH) resource / a physical uplink shared channel (PUSCH) resource corresponding to the performance monitoring report;
a first event, in which the first event includes a performance metric configured to determine that a performance value of the second model satisfies a preset performance condition;
a first threshold corresponding to the first event, in which the first threshold is configured to determine whether to trigger the first event; or
a first offset value corresponding to the first event, in which the first offset value is configured to determine whether to trigger the first event.

In the above embodiments, a reference signal resource configured by the network device to the terminal is provided, and the terminal may perform operations such as measurement and reporting based on the reference signal resource to cooperate with the network device to complete performance monitoring of the model, thus improving the flexibility of model performance monitoring.

In some embodiments in combination with the first aspect, in some embodiments, the method further includes:
sending the performance monitoring report to the network device, in which the performance monitoring report includes at least one of:
measurement data;
prediction data;
the performance value of the second model, in which the performance value is determined based on the measurement data and the prediction data;
the first event, in which the first event is triggered based on a comparison result between the performance value of the second model and the first threshold or the first offset value; or
first operation information, in which the first operation information indicates a management operation on the second model, and the management operation includes whether to activate the second model.

In the above embodiments, the terminal may report the model performance monitoring report to the network device, so that the network device manages the model based on the performance monitoring report, and activates the model in time when the model may satisfy a performance requirement, thus improving the network performance.

In some embodiments in combination with the first aspect, in some embodiments, the method further includes:
obtaining the measurement data by performing measurement on the beams in the fourth reference signal resource set based on the first information.

In the above embodiments, the terminal performs measurement on the beams to be measured based on the first information sent by the network device, to obtain input data for performing performance monitoring of the model.

In some embodiments in combination with the first aspect, in some embodiments, the measurement data includes at least one of:
layer 1-reference signal receiving powers (L1-RSRPs) of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a block error rate (BLER) of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

In the above embodiments, specific content of the measurement data obtained after the terminal performs measurement on the beams to be measured is provided, so that the first model may accurately perform prediction based on the measurement data, thus improving the accuracy of performance monitoring.

In some embodiments in combination with the first aspect, in some embodiments, the method further includes:
obtaining the measurement data by performing measurement on the beams in the third reference signal resource set based on the first information.

In the above embodiments, the terminal performs measurement on the beams to be predicted based on the first information sent by the network device, to obtain comparison data for performing performance monitoring of the model.

In some embodiments in combination with the first aspect, in some embodiments, the measurement data includes at least one of:

L1-RSRPs of best K beams measured in the third reference signal resource set; or
an L1-RSRP of each beam measured in the third reference signal resource set.

In the above embodiments, specific content of the measurement data obtained after the terminal performs measurement on the beams to be predicted is provided, so that the first model may accurately determine the performance value of the model based on the measurement data, thus improving the accuracy of performance monitoring.

In some embodiments in combination with the first aspect, in some embodiments, the method further includes:
obtaining the prediction data based on the measurement data corresponding to the third reference signal resource set.

In the above embodiments, the terminal may perform prediction via the first model based on a measurement result of the beams to be predicted, to obtain the prediction data.

In some embodiments in combination with the first aspect, in some embodiments, the prediction data includes at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of the radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

In the above embodiments, specific content of the prediction data obtained after the model performs prediction is provided, so that a more accurate performance value may be determined based on a comparison result between the prediction data and the measurement data, thus improving the accuracy of performance monitoring.

In some embodiments in combination with the first aspect, in some embodiments, the performance metric includes at least one of:
prediction accuracy of a beam or a beam pair;
prediction accuracy of a beam or a beam pair for which an L1-RSRP difference is within a first threshold, in which the L1-RSRP difference is a difference between a measured L1-RSRP of a best predicted beam or a best predicted beam pair and a measured L1-RSRP of a measured best beam or a measured best beam pair;
an L1-RSRP difference degree, in which the L1-RSRP difference degree is a difference degree between the measured L1-RSRP of the best predicted beam or the best predicted beam pair and the measured L1-RSRP of the measured best beam or the measured best beam pair; and the L1-RSRP difference degree includes at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, in which the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree includes at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
a difference degree for BLER prediction;
prediction accuracy for beam failure time; or
prediction accuracy for a new beam.

In the above embodiments, the performance metric for determining the performance value of the model is provided, so that a more comprehensive and accurate performance evaluation may be performed on the model, thus further improving the accuracy of model performance monitoring.

In some embodiments in combination with the first aspect, in some embodiments, the performance value includes at least one of:
accuracy of the predicted beam or the predicted beam pair;
prediction accuracy of the beam or the beam pair for which the L1-RSRP difference is within the first threshold;
a first L1-RSRP difference degree, in which the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, in which the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
the prediction accuracy for beam failure probability;
the difference degree for radio link quality prediction, in which the difference degree for radio link quality prediction is a difference degree between predicted radio link quality and measured radio link quality;
the difference degree for BLER prediction, in which the difference degree for BLER prediction is a difference degree between a predicted BLER and a measured BLER;
the prediction accuracy for beam failure time; or
the prediction accuracy for the new beam.

In the above embodiments, a plurality of performance values of the model are provided, so that a more comprehensive and accurate performance evaluation may be performed on the model, thus further improving the accuracy of model performance monitoring.

In some embodiments in combination with the first aspect, in some embodiments, the first threshold includes at least one of:
a first accuracy threshold;
a second accuracy threshold;
a first difference degree threshold;
a second difference degree threshold;
a first throughput threshold;
a first overhead threshold;
a second overhead threshold;
a first delay threshold;
a third accuracy threshold;
a third difference degree threshold;
a fourth difference degree threshold;
a fourth accuracy threshold; or
a fifth accuracy threshold.

In the above embodiments, a plurality of thresholds are provided for determining the performance value of the model, so that the determined performance value is more accurate.

In some embodiments in combination with the first aspect, in some embodiments, the first event includes at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

In the above embodiments, the terminal may trigger an event to the network device when the terminal determines that the model performance is good, so that the network device may determine a performance state of the model more accurately and quickly.

In some embodiments in combination with the first aspect, in some embodiments, the second model is a model in an inactive state, and the method further includes:
receiving an activation command sent by the network device; and
activating the second model based on the activation command.

In the above embodiments, the network device may instruct the terminal to activate the model when the network device determines that the performance state of the model satisfies an activation condition, thus improving the network performance.

In some embodiments in combination with the first aspect, in some embodiments, the first model and/or the second model is deployed on the terminal, or the first model and/or the second model is deployed on the network device.

In the above embodiments, different deployment modes of the model are provided, thus improving the flexibility of model deployment.

In some embodiments in combination with the first aspect, in some embodiments, the method further includes:
sending capability indication information to the network device, in which the capability indication information indicates at least one of:
whether the terminal supports the first model and/or the second model;
whether the terminal supports performance monitoring of an inactive model deployed on the terminal; or
whether the terminal supports performance monitoring of the inactive model deployed on the network device.

In the above embodiments, the terminal may report the capability indication information to the network device, so that the network device may perform resource configuration based on a capability of the terminal and avoid sending incorrect information, thus improving the efficiency of model performance monitoring.

In a second aspect, embodiments of the disclosure provide a method for model performance monitoring. The method includes:
sending first information to a terminal, in which the first information is configured to determine performance monitoring of a first model.

In some embodiments in combination with the second aspect, in some embodiments, the method further includes:
receiving second information sent by the terminal, in which the second information is configured to request performance monitoring of the first model.

In some embodiments in combination with the second aspect, in some embodiments, the second information includes at least one of:
an SR for requesting model performance monitoring;
a first Msg 1 or a Msg A of an RA for requesting model performance monitoring;
a model ID of the first model;
a functionality ID corresponding to the first model; or
first configuration information, in which the first configuration information includes a resource configuration for performing performance monitoring of the first model.

In some embodiments in combination with the second aspect, in some embodiments, the first model is a model for performing beam prediction, and the first configuration information includes at least one of:
a first reference signal resource set, in which the first reference signal resource set includes beams to be measured;
a second reference signal resource set, in which the second reference signal resource set includes beams to be predicted;
a relationship between the first reference signal resource set and the second reference signal resource set;
a first performance monitoring duration, in which the first performance monitoring duration is a duration for performance monitoring of the first model requested by a terminal; or
a first sample number, in which the first sample number is a number of samples requested by the terminal for performing performance monitoring of the first model, and the number of samples is a number of times the network device sends a reference signal resource.

In some embodiments in combination with the second aspect, in some embodiments, the first model is a model for performing spatial domain beam prediction, and the relationship between the first reference signal resource set and the second reference signal resource set includes at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

In some embodiments in combination with the second aspect, in some embodiments, the first model is a model for performing time domain beam prediction, and the relationship between the first reference signal resource set and the second reference signal resource set includes at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, in which the first time is a time at which measurement is performed on the first reference signal resource set, and the second time is a time at which prediction or measurement is performed on the second reference signal resource set.

In some embodiments in combination with the second aspect, in some embodiments, the method further includes:
sending third information to the terminal, in which the third information is configured to request performance monitoring of a second model; and
receiving fourth information sent by the terminal based on the third information, in which the fourth information indicates an agreement to the request of the third information.

In some embodiments in combination with the second aspect, in some embodiments, the first information includes at least one of:
a model ID of a second model;
a functionality ID corresponding to the second model;
a third reference signal resource set, in which the third reference signal resource set includes beams to be measured;
a fourth reference signal resource set, in which the fourth reference signal resource set includes beams to be predicted;
a relationship between the third reference signal resource set and the fourth reference signal resource set;
a relationship between a third time and a fourth time, in which the third time is a time at which measurement is performed on the third reference signal resource set, and the fourth time is a time at which prediction or measurement is performed on the fourth reference signal resource set;
a second performance monitoring duration, in which the second performance monitoring duration is a duration for performance monitoring of the second model requested by the network device;
a second sample number, in which the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples included in one performance monitoring report;
a model management threshold, in which the model management threshold is configured to determine whether to activate the second model;
a PUCCH resource/ a PUSCH resource corresponding to the performance monitoring report;
a first event, in which the first event includes a performance metric configured to determine that a performance value of the second model satisfies a preset performance condition;
a first threshold corresponding to the first event, in which the first threshold is configured to determine whether to trigger the first event; or
a first offset value corresponding to the first event, in which the first offset value is configured to determine whether to trigger the first event.

In some embodiments in combination with the second aspect, in some embodiments, the method further includes:
receiving the performance monitoring report sent by the terminal, in which the performance monitoring report includes at least one of:
measurement data;
prediction data;
the performance value of the second model, in which the performance value is determined based on the measurement data and the prediction data;
the first event, in which the first event is triggered based on a comparison result between the performance value of the second model and the first threshold or the first offset value; or
first operation information, in which the first operation information indicates a management operation on the second model, and the management operation includes whether to activate the second model.

In some embodiments in combination with the second aspect, in some embodiments, the measurement data is obtained by the terminal by performing measurement on the beams in the fourth reference signal resource set based on the first information; and the measurement data includes at least one of:
L1-RSRPs of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a BLER of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

In some embodiments in combination with the second aspect, in some embodiments, the measurement data is obtained by the terminal by performing measurement on the beams in the third reference signal resource set based on the first information; the measurement data includes at least one of:
L1-RSRPs of best K beams measured in the third reference signal resource set; or
an L1-RSRP of each beam measured in the third reference signal resource set.

In some embodiments in combination with the second aspect, in some embodiments, the prediction data is obtained by the terminal based on the measurement data corresponding to the third reference signal resource set; and the prediction data includes at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

In some embodiments in combination with the second aspect, in some embodiments, the performance metric includes at least one of:
prediction accuracy of a beam or a beam pair;
prediction accuracy of a beam or a beam pair for which an L1-RSRP difference is within a first threshold, in which the L1-RSRP difference is a difference between a measured L1-RSRP of a best predicted beam or a best predicted beam pair and a measured L1-RSRP of a measured best beam or a measured best beam pair;
an L1-RSRP difference degree, in which the L1-RSRP difference degree is a difference degree between the measured L1-RSRP of the best predicted beam or the best predicted beam pair and the measured L1-RSRP of the measured best beam or the measured best beam pair; and the L1-RSRP difference degree includes at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, in which the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree includes at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
a difference degree for BLER prediction;
prediction accuracy for beam failure time; or
prediction accuracy for a new beam.

In some embodiments in combination with the second aspect, in some embodiments, the performance value includes at least one of:
accuracy of the predicted beam or the predicted beam pair;
prediction accuracy of the beam or the beam pair for which the L1-RSRP difference is within the first threshold;
a first L1-RSRP difference degree, in which the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, in which the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
the prediction accuracy for beam failure probability;
the difference degree for radio link quality prediction, in which the difference degree for radio link quality prediction is a difference degree between predicted radio link quality and measured radio link quality;
the difference degree for BLER prediction, in which the difference degree for BLER prediction is a difference degree between a predicted BLER and a measured BLER;
the prediction accuracy for beam failure time; or
the prediction accuracy for the new beam.

In some embodiments in combination with the second aspect, in some embodiments, the first threshold includes at least one of:
a first accuracy threshold;
a second accuracy threshold;
a first difference degree threshold;
a second difference degree threshold;
a first throughput threshold;
a first overhead threshold;
a second overhead threshold;
a first delay threshold;
a third accuracy threshold;
a third difference degree threshold;
a fourth difference degree threshold;
a fourth accuracy threshold; or
a fifth accuracy threshold.

In some embodiments in combination with the second aspect, in some embodiments, the first event includes at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

In some embodiments in combination with the second aspect, in some embodiments, the method further includes:
determining to activate the second model based on the performance monitoring report; and
activating the second model, or sending an activation command to the terminal, in which the activation command is used by the terminal to activate the second model.

In some embodiments in combination with the second aspect, in some embodiments, the first model and/or the second model is deployed on the terminal, or the first model and/or the second model is deployed on the network device.

In some embodiments in combination with the second aspect, in some embodiments, the method further includes:
receiving capability indication information sent by the terminal, in which the capability indication information indicates at least one of:
whether the terminal supports the first model and/or the second model;
whether the terminal supports performance monitoring of an inactive model deployed on the terminal; or
whether the terminal supports performance monitoring of the inactive model deployed on the network device.

In a third aspect, embodiments of the disclosure provide a method for model performance monitoring. The method includes:
sending, by a terminal, second information to a network device, in which the second information is configured to request performance monitoring of a first model; and
sending, by the network device, first information to the terminal, in which the first information is configured to determine performance monitoring of the first model.

In a fourth aspect, embodiments of the disclosure provide a terminal. The terminal may include at least one of a transceiver module or a processing module, in which the terminal may be configured to perform optional implementations of the first aspect.

In a fifth aspect, embodiments of the disclosure provide a network device. The network device may include at least one of a transceiver module or a processing module, in which the network device may be configured to perform optional implementations of the second aspect.

In a sixth aspect, embodiments of the disclosure provide a terminal. The terminal may include one or more processors, in which the terminal may be configured to perform optional implementations of the first aspect.

In a seventh aspect, embodiments of the disclosure provide a network device. The network device may include one or more processors, in which the network device may be configured to perform optional implementations of the second aspect.

In an eighth aspect, embodiments of the disclosure provide a communication system. The communication system may include: a terminal, configured to perform the method described in optional implementations of the first aspect, and a network device, configured to perform the method described in optional implementations of the second aspect.

In a ninth aspect, embodiments of the disclosure provide a storage medium. The storage medium stores instructions which, when executed on a communication device, cause the communication device to perform the method described in optional implementations of the first aspect or the method described in optional implementations of the second aspect.

In a tenth aspect, embodiments of the disclosure provide a program product. The program product, when executed by a communication device, causes the communication device to perform the method described in optional implementations of the first aspect or the method described in optional implementations of the second aspect.

In an eleventh aspect, embodiments of the disclosure provide a computer program. When the computer program is running on a computer, the computer is caused to perform the method described in optional implementations of the first aspect or the method described in optional implementations of the second aspect.

In a twelfth aspect, embodiments of the disclosure provide a chip or a chip system. The chip or chip system includes a processing circuit, configured to perform the method described in optional implementations of the first aspect or the method described in optional implementations of the second aspect.

It may be understood that the network device, the terminal, the communication device, the communication system, the storage medium, the program product, the computer program and the chip or the chip system may be all used to implement the method in the embodiments of the disclosure. Thus, regarding beneficial effects they may achieve, reference may made be to the beneficial effects in the corresponding methods, which is not repeated herein.

Embodiments of the disclosure provide a method for model performance monitoring, a device, and a storage medium. In some embodiments, terms such as "method for model performance monitoring", ""monitoring method", "method for information processing", and "communication method" may be used interchangeably; terms such as "apparatus for model performance monitoring", "monitoring apparatus", "apparatus for information processing", "communication apparatus", and "communication device" may be used interchangeably; and terms such as "system for model performance monitoring", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In some embodiments, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language corresponding to the communication between the terminals (for example, "side"). For example, the uplink channel, the downlink channel, etc. may be replaced with the side channel or direct channel, and the uplink, the downlink, etc. may be replaced with a sidelink or a direct link.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

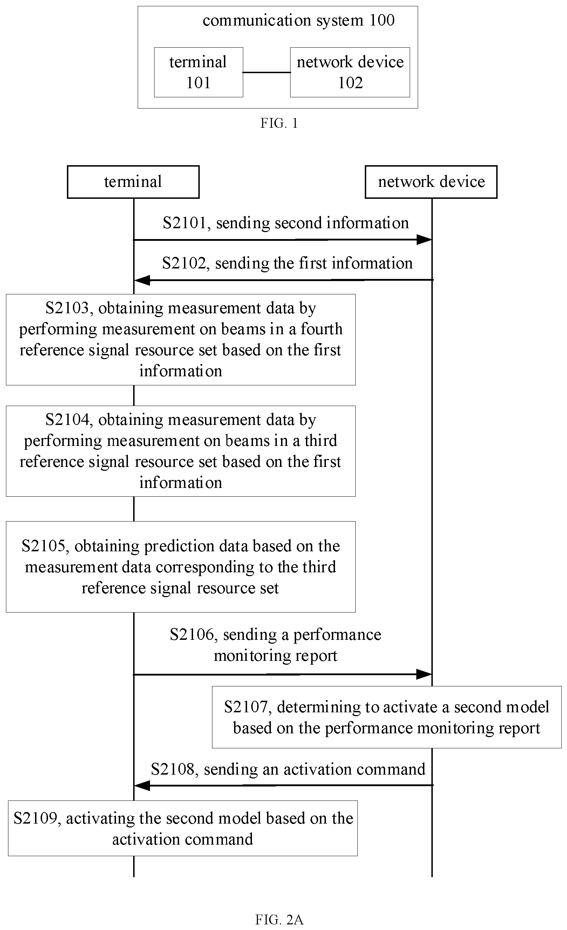

FIG. 1 is a schematic diagram illustrating an architecture of a communication system according to an embodiment of the disclosure. As shown in FIG. 1, the communication system 100 may include a terminal 101 and a network device 102.

In some embodiments, the terminal 101 may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, interfaces between or within the access network devices involved in embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be a device, or may be a plurality of devices or device groups. The core network may include at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments of the disclosure, the above communication system may introduce a first model. The first model may be an AI model or other models for prediction. The first model may be one or more models, and the first model may include one or more functionalities. The first model may be deployed on a terminal or may be deployed on a network device.

In NR communication, for an FR2 communication frequency band, since attenuation of a highfrequency channel is relatively fast, to ensure the coverage, transmission and reception based on beams may be used.

In some embodiments, a network device may configure a reference signal resource set for beam measurement, and a terminal may perform measurement on reference signal resources in the reference signal resource set, and report IDs of X reference signal resources with relatively strong signal quality in a measurement result, and an L1-RSRP and/or a layer 1-signal to interference plus noise ratio (L1-SINR) of each reference signal resource in the X reference signal resources. The reference signal resource set configured by the network device includes X reference signal resources, each reference signal resource corresponds to a different transmit (TX) beam of the network device. For each reference signal resource, the terminal needs to perform measurement on the reference signal resource via all receive (RX) beams, determine beam measurement quality corresponding to each RX beam, and determine the strongest beam measurement quality from a plurality of beam measurement qualities. In the above measurement process, if the number of TX beams of the network device is M and the number of RX beams of the terminal is N, the number of beam pairs that the terminal needs to measure is M*N. In the following embodiments of the disclosure, L1-RSRP is used as an example for illustration, in which the L1-RSRP may also be partially or completely replaced by the L1-SINR.

In some embodiments, beam measurement quality is predicted by an AI model. For example, for spatial domain beam prediction, the terminal may measure only a part of beam pairs. For example, the beam pairs measured by the terminal may be 1/8, 1/4, etc. of the M*N beam pairs, and beam measurement qualities of the measured part of beam pairs are input into the AI model, and beam qualities of the M*N beam pairs are obtained via prediction by the AI model. For example, for spatial domain beam prediction, the terminal may measure only a part of beams. For example, the beams measured by the terminal may be 1/8, 1/4, etc. of the M TX beams, and beam measurement qualities of the measured part of beams are input into the AI model, and beam qualities of the M TX beams are obtained via prediction by the AI model. For time domain beam prediction, the terminal may obtain historical beam measurement qualities by measuring beam qualities of beam pairs at a historical time, and predict beam qualities of beam pairs at a future time via the AI model based on the historical beam measurement qualities. Similarly, for time domain beam prediction, beam pairs may also be replaced by TX beams.

In some embodiments, for spatial domain beam prediction, a measurement result of beams in a beam set A may be predicted based on a measurement result of beams in a beam set B; for time domain beam prediction, a measurement result of beams in a set A at a future time may be predicted based on a measurement result of beams in a set B at a historical time.

In some embodiments, for spatial domain beam prediction, the terminal may measure an L1-RSRP of each beam in the set B, and obtain an L1-RSRP of each beam in the set A by inputting a plurality of measured L1-RSRPs into an AI model.

A relationship between the set B and the set A may include at least one of:
the set B may be a subset of the set A; for example, the set A includes 32 reference signals (each reference signal corresponds to one beam direction), and the set B includes N reference signals, N < 32, e.g., N=8; or
beams corresponding to the set B are wide beams, and beams corresponding to the set A are narrow beams; for example, the set A includes 32 reference signals, each reference signal corresponds to one beam direction, and the coverage of the 32 reference signals is 120 degrees; the set B includes N reference signals, e.g., N=8, and the coverage of the N reference signals is also 120 degrees; that is, beam directions of the plurality of reference signals in the set B cover beam directions of the plurality of reference signals in the set A, which may also be understood as that 32/N reference signals in the set A and the same reference signal in the set B are in a quasi co-location (QCL) Type D relationship.

In some embodiments, for time domain beam prediction, the terminal may measure an L1-RSRP of each beam in the set B at a historical time, and input the plurality of measured L1-RSRPs into an AI model to predict an L1-RSRP of each beam in the set A at a future time.

The relationship between the set B and the set A may include at least one of:
the set B may be a subset of the set A;
the set B is the same as the set A; or
beams corresponding to the set B are wide beams, and beams corresponding to the set A are narrow beams.

In some embodiments, for time domain beam prediction, the network device may not send a reference signal to the terminal at a future time, and after obtaining a measurement result through prediction by the AI model, the terminal may report the measurement result to the network device.

In some embodiments, the AI model may further predict beam failure information respectively corresponding to best K beams, for example, a probability that beam failure occurs on the best K beams within a specified time.

In some embodiments, the AI model may further predict radio link quality values of the best K beams at the specified time.

In some embodiments, an AI model has a corresponding life cycle. For example, the AI model has a corresponding applicable scope and applicable environment. Some AI models are suitable for suburban areas, some for urban areas, some for indoors, some for morning and evening peak hours, some for idle hours, etc. How the terminal determines the performance of the AI model before activating the AI model, so as to activate the AI model when the AI model achieves a relatively good prediction effect, is an urgent problem to be solved.

FIG. 2A is a flowchart illustrating a method for model performance monitoring according to an embodiment of the disclosure. The method may be performed by the above communication system. As shown in FIG. 2A, the method may include the following steps S2101 to S2109.

At step S2101, a terminal sends second information to a network device.

In some embodiments, the network device may receive the second information. For example, the network device may receive the second information sent by the terminal. For another example, the network device may also receive second information sent by another entity.

In some embodiments, the second information may be configured to request performance monitoring of a first model.

In some embodiments, the second information may be configured to instruct the network device to perform performance monitoring of the first model.

In some embodiments, the second information may be configured to trigger the network device to perform performance monitoring of the first model.

In some embodiments, the second information may be configured to request the network device to send first information.

In some embodiments, the second information may be configured to instruct the network device to send the first information.

In some embodiments, the second information may be configured to trigger the network device to send the first information.

In some embodiments, the name of the second information is not limited, and may be, for example, "request information for model performance monitoring", "indication information for model performance monitoring", "request information for functionality performance monitoring", "indication information for functionality performance monitoring", etc.

In some embodiments, the first model may be an inactive model.

In some embodiments, the first model may be deployed on the terminal.

In some embodiments, the first model may be one or more models.

In some embodiments, the first model may correspond to one or more functionalities.

In some embodiments, the terminal may send capability indication information to the network device.

In some embodiments, the capability indication information may include at least one of:
whether the terminal supports performance monitoring of an inactive model deployed on the terminal; or
whether the terminal supports performance monitoring of the inactive model deployed on the network device.

In some embodiments, the first model may be used for channel state information (CSI) compression, CSI prediction, spatial domain beam prediction, time domain beam prediction, beam failure information prediction, positioning, etc.

In some embodiments, before activating the first model, the terminal may send the second information to the network device, to request performance monitoring of the first model, and activate the first model in the case of determining, based on a result of the performance monitoring, that a performance state of the first model is good.

In some embodiments, the second information may include at least one of:
an SR for requesting model performance monitoring;
a first Msg 1 or a Msg A of an RA for requesting model performance monitoring;
a model ID of the first model;
a functionality ID corresponding to the first model; or
first configuration information, in which the first configuration information includes a resource configuration for performing performance monitoring of the first model.

The SR may be an SR dedicated to requesting model performance monitoring, or a multiplexed existing SR for requesting allocation of uplink resources, or an SR dedicated to beam failure recovery and an SR for listen before talk (LBT).

The RA may be a contention free RA, configured with a dedicated preamble. When the network device receives the Msg 1 or the Msg A (including the preamble of Msg 1 and a PUSCH of Msg 3) sent by the terminal, the network device may determine that the terminal requests model performance monitoring.

The RA may also be a contention based RA. The network device may determine, based on the Msg 3 sent by the terminal or the Msg 3 in Msg A, that the terminal requests model performance monitoring.

If the first model has been identified, after receiving the model ID of the first model sent by the terminal, the network device may determine that the terminal requests performance monitoring of the first model. For example, the terminal may place the model ID of the first model in the PUSCH of the Msg 3 or the Msg A, or in a PUSCH obtained via an SR request, and send it to the network device.

In this case, "the first model being identified" may be understood as that the terminal has sent model information of the first model to the network device, in which the model information may include a model architecture, model parameters, model performance, a model ID, a condition to which the model is applicable, etc., and the network device has identified the first model based on the model information. After identifying the first model, the network device may reach a unified understanding of the model information of the first model with the terminal. Alternatively, if the first model is sent by the network device to the terminal, the network device and the terminal may also reach a unified understanding of the model information of the first model.

If the network device has identified a functionality corresponding to the first model, after receiving the functionality ID corresponding to the first model sent by the terminal, the network device may determine that the terminal requests performance monitoring of the first model. For example, the terminal may place the functionality ID corresponding to the first model in the PUSCH of the Msg 3 or the Msg A, or in the PUSCH obtained via the SR request, and send it to the network device.

In this case, "the functionality corresponding to the first model being identified" may be understood as that the terminal has sent functionality information of the first model to the network device, in which the functionality information may include functionality parameters, functionality performance, a functionality ID, a condition to which the functionality is applicable, etc., and the network device has identified the first model based on the functionality information. After identifying the functionality corresponding to the first model, the network device may reach a unified understanding of performance and architecture parameters of the functionality corresponding to the first model with the terminal. Alternatively, if the functionality corresponding to the first model is sent by the network device to the terminal, the network device and the terminal may also reach a unified understanding of the functionality information corresponding to the first model.

In some embodiments, the first model may be a model for performing beam prediction, and the first configuration information may include at least one of:
a first reference signal resource set, in which the first reference signal resource set includes beams to be measured;
a second reference signal resource set, in which the second reference signal resource set includes beams to be predicted;
a relationship between the first reference signal resource set and the second reference signal resource set;
a first performance monitoring duration, in which the first performance monitoring duration is a duration for performance monitoring of the first model requested by a terminal; or
a first sample number, in which the first sample number is a number of samples requested by the terminal for performing performance monitoring of the first model, and the number of samples is a number of times the network device sends a reference signal resource.

In this case, "beams to be measured" and "beams to be predicted" are definitions when the model is actually used. "Beams to be measured" may be understood as beams that need to be actually measured as an input to the first model, and "beams to be predicted" may be understood as beams that may be predicted as an output of the first model. In this case, the beams may be understood as TX beams, or TX-RX beam pairs.

For example, an actual measurement result of each beam in the first reference signal resource set may be used as an input to the first model, and a prediction result of each beam in the second reference signal resource set is obtained via prediction by the first model.

In some embodiments, a beam may correspond to a reference signal resource. The reference signal resource may be configured to carry a corresponding reference signal, and each reference signal may correspond to a beam direction. For each beam, the network device may configure a reference signal resource corresponding to a reference signal, and the terminal may perform measurement on the beam based on the reference signal.

In some embodiments, the first performance monitoring duration may be understood as a duration during which the network device needs to send the reference signal.

In some embodiments, pieces of first configuration information corresponding to different models may be different.

In some embodiments, the first model is a model for performing spatial domain beam prediction, and the relationship between the first reference signal resource set and the second reference signal resource set includes at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

The first reference signal resource set being a subset of the second reference signal resource set indicates that the beams to be measured in the first reference signal resource set are a subset of the beams to be predicted in the second reference signal resource set. For example, if the second reference signal resource set includes 32 beams, the first reference signal resource set may include 4 beams among the 32 beams in the second reference signal resource set, thus the first reference signal resource set is a subset of the second reference signal resource set.

The first reference signal resource set being a subset of the second reference signal resource set may be represented by the fact that which reference signal resources in the second reference signal resource set correspond to the first reference signal resource set. For example, the second reference signal resource set is set A, in which the set A includes 32 beams (for ease of explanation, the 32 beams may be denoted as beam 1, beam 2, beam 3, beam 4, beam 5, ..., beam 30, beam 31, beam 32), the first reference signal resource set is set B, in which the set B includes 4 beams (for ease of explanation, the 4 beams may be denoted as beam 1, beam 2, beam 3, beam 4), beam 1 in the set B corresponds to beam 8 in the set A, beam 2 in the set B corresponds to beam 16 in the set A, beam 3 in the set B corresponds to beam 24 in the set A, and beam 4 in the set B corresponds to beam 32 in the set A. Through the correspondence between beams in set B and beams in set A, it may be seen that the 4 beams in set B are a subset of the 32 beams in set A.

It is also noted that the number of beams in the first reference signal resource set and the number of beams in the second reference signal resource set described above are exemplary, and the correspondence between beams in the first reference signal resource set and beams in the second reference signal resource set is also exemplary, which is not limited in embodiments of the disclosure.

In an implementation, the beam coverage corresponding to the first reference signal resource set being the same as the beam coverage corresponding to the second reference signal resource set may be represented as the fact that each wide beam in the first reference signal resource set may cover a plurality of narrow beams in the second reference signal resource set. For example, if the first reference signal resource set is set B, in which the set B includes 8 wide beams (for ease of explanation, the 8 beams may be denoted as beam 1, beam 2, beam 3, beam 4, ..., beam 8), the second reference signal resource set is set A, in which the set A includes 32 narrow beams (for ease of explanation, the 32 beams may be denoted as beam 1, beam 2, beam 3, beam 4, beam 5, ..., beam 30, beam 31, beam 32), then the correspondence between each wide beam in the first reference signal resource set and the narrow beams in the second reference signal resource set covered by the wide beam may be represented as the fact that beam 1 in the set B covers beam 1, beam 2, beam 3, and beam 4 in the set A, beam 2 in the set B covers beam 5, beam 6, beam 7, and beam 8 in the set A, and so on, beam 8 in the set B covers beam 29, beam 30, beam 31, and beam 32 in the set A.

In some embodiments, the first model is a model for performing time domain beam prediction, and the relationship between the first reference signal resource set and the second reference signal resource set includes at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, in which the first time is a time at which measurement is performed on the first reference signal resource set, and the second time is a time at which prediction or measurement is performed on the second reference signal resource set.

The first reference signal resource set being the same as the second reference signal resource set indicates that the beams to be measured in the first reference signal resource set are the same as the beams to be predicted in the second reference signal resource set. For the model for time domain beam prediction, a measurement result of each beam in the first reference signal resource set obtained by measurement at the first time may be used to predict a measurement result of each beam in the second reference signal resource set at the second time. Thus, the terminal may not perform any measurement at the second time.

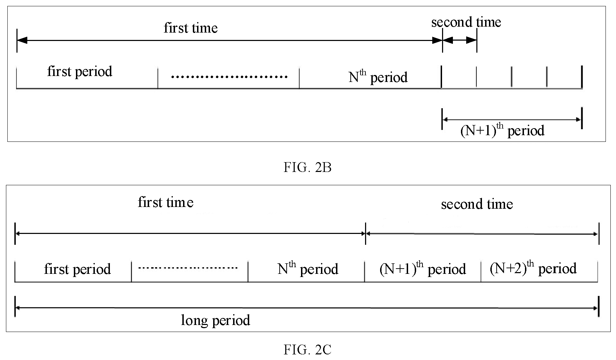

In some embodiments, the relationship between the first time and the second time may be in a sliding window mode, i.e., the second time is located between two consecutive first times. FIG. 2B is a schematic diagram illustrating a time relationship according to an embodiment of the disclosure. As shown in FIG. 2B, the first time includes N long periods, and the second time is a short period within an (N+1)^{th} long period.

In some embodiments, there may also be a measurement interruption between the first time and the second time. FIG. 2C is a schematic diagram illustrating a time relationship according to an embodiment of the disclosure. As shown in FIG. 2C, the first time includes N periods, and the second time includes 2 periods. For example, after measurement is performed on the first reference signal resource set from the first period to the N^{th} period included in the first time, prediction is performed on the second reference signal resource set from the (N+1)^{th} period to the (N+2)^{th} period included in the second time.

It should be noted that a single interruption between the first time and the second time as shown in FIG. 2C means that measurement may start to be performed from the (N+3)^{th} period after prediction is performed in the second time. For example, taking N=4 as an example, measurement may be performed in the 1st to 4th periods, prediction may be performed in the 5^{th} to 6^{th} periods, measurement may be performed in the 7^{th} to 10^{th} periods, and prediction may be performed in the 11^{th} to 12^{th} periods.

In some embodiments, the relationship between the first time and the second time may further include a number of periods included in the first time, a length of periods included in the first time, a duration corresponding to each second time, etc. For example, taking FIG. 2C as an example, the second time includes the (N+1)^{th} period and the (N+2)^{th} period, so the duration corresponding to the second time is 1 period length (corresponding to the (N+1)^{th} period) and 2 period lengths (corresponding to the (N+2)^{th} period).

In some embodiments, if reference signal resources for performing performance monitoring of a model corresponding to different model IDs are also different, i.e., the reference signal resource corresponding to each model ID may be uniquely determined, the second information may include the model ID of the first model and does not include the first configuration information. For example, the terminal may trigger the network device to configure the reference signal resource for model performance monitoring by reporting the model ID of the first model.

In some embodiments, if reference signal resources for performing performance monitoring of a model corresponding to different functionality IDs are also different, i.e., the reference signal resource corresponding to each functionality ID is uniquely determined, the second information may include the functionality ID of the first model and does not include the first configuration information. For example, the terminal may trigger the network device to configure the reference signal resource for model performance monitoring by reporting the functionality ID of the first model.

At step S2102, the network device sends the first information to the terminal.

The first information may be configured to determine performance monitoring of the first model.

In some embodiments, the terminal may receive the first information. For example, the terminal may receive the first information sent by the network device. For another example, the terminal may also receive first information sent by another entity.

In some embodiments, the first information may include information for performing performance monitoring of a second model.

In some embodiments, the first information may include a first signal for performing performance monitoring of the second model. The first signal may include at least one of a channel state information-reference signal (CSI-RS), a synchronization signal block (SSB), a positioning reference signal (PRS), or other signals sent by the network device to the terminal.

In some embodiments, the name of the first information is not limited, and may be, for example, "performance monitoring information", "monitoring information", "model monitoring information", etc.

In some embodiments, the network device may send a first message, in which the first message may include the above first information. Optionally, the terminal may receive the first message. The first message may include at least one of a radio resource control (RRC) message, a medium access control control element (MAC CE), downlink control information (DCI), or other messages sent by the network device to the terminal.

In some embodiments, the network device may send the first message to the terminal, and optionally, the terminal may receive the first message sent by the network device.

In some embodiments, the network device may determine, based on the second information, to perform performance monitoring of the first model, and send the first information to the terminal.

In some embodiments, the first information may include at least one of:
a model ID of a second model;
a functionality ID corresponding to the second model;
a third reference signal resource set, in which the third reference signal resource set includes beams to be measured;
a fourth reference signal resource set, in which the fourth reference signal resource set includes beams to be predicted;
a relationship between the third reference signal resource set and the fourth reference signal resource set;
a relationship between a third time and a fourth time, in which the third time is a time at which measurement is performed on the third reference signal resource set, and the fourth time is a time at which prediction or measurement is performed on the fourth reference signal resource set;
a second performance monitoring duration, in which the second performance monitoring duration is a duration for performance monitoring of the second model requested by the network device;
a second sample number, in which the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples included in one performance monitoring report;
a model management threshold, in which the model management threshold is configured to determine whether to activate the second model;
a PUCCH resource / a PUSCH resource corresponding to the performance monitoring report;
a first event, in which the first event includes a performance metric configured to determine that a performance value of the second model satisfies a preset performance condition;
a first threshold corresponding to the first event, in which the first threshold is configured to determine whether to trigger the first event; or
a first offset value corresponding to the first event, in which the first offset value is configured to determine whether to trigger the first event.

In some embodiments, the second model may be the same as the first model, or the second model may be different from the first model.

In some embodiments, the second model may be a model having the same functionality as the first model.

In some embodiments, the second model may also be any model different from the first model.

In some embodiments, the preset performance condition may include that a performance value is greater than a performance threshold. The performance threshold may be specified by a protocol or may be an empirical value, which is not limited in the embodiments of the disclosure.

For example, after receiving the second information sent by the terminal, if the network device determines to perform performance monitoring of the first model, the network device may send the model ID of the first model to the terminal. If the network device determines to perform performance monitoring of one or more functionalities of the first model, the network device may send the functionality ID corresponding to the first model to the terminal. If the network device determines not to perform performance monitoring of the first model, the network device may select a second model having the same functionality as the first model for performance monitoring, or select one or more functionalities of the second model for performance monitoring, and then send the model ID of the second model or the functionality ID corresponding to the second model to the terminal. The network device may also not respond to the second information sent by the terminal, select any second model that needs performance monitoring, and send the model ID of the second model or the functionality ID corresponding to the second model to the terminal. The second model may be a model deployed on the terminal or a model deployed on the network device.

In some embodiments, the third reference signal resource set may be the same as the first reference signal resource set, and the fourth reference signal resource set may be the same as the second reference signal resource set.

For example, if the network device determines to perform performance monitoring of the first model, the network device may send, to the terminal, the third reference signal resource set which is the same as the first reference signal resource, and the fourth reference signal resource set which is the same as the second reference signal resource.

In some embodiments, the third reference signal resource set may be different from the first reference signal resource set, and the fourth reference signal resource set may be different from the second reference signal resource set.

In an implementation, the third reference signal resource set may be determined based on the first reference signal resource set, and the fourth reference signal resource set may be determined based on the second reference signal resource set.

For example, if the network device determines to perform performance monitoring of the first model, the network device may adjust the first reference signal resource set and the second reference signal resource set sent by the terminal, and send the adjusted third reference signal resource set and the adjusted fourth reference signal resource set to the terminal.

In an implementation, the third reference signal resource set and the fourth reference signal resource set may also be reference signal resource sets re-determined by the network device based on the first model. "Re-determined" may be understood as that the network device determines the third reference signal resource set and the fourth reference signal resource set without reference to the first reference signal resource set and the second reference signal resource set.

In an implementation, the third reference signal resource set and the fourth reference signal resource set may also be reference signal resource sets configured by the network device for performing performance monitoring of the second model, in which the second model is different from the first model.

It should be noted that, for the relationship between the third reference signal resource set and the fourth reference signal resource set, reference may be made to the above relationship between the first reference signal resource set and the second reference signal resource set, which is not repeated herein. For the relationship between the third time and the fourth time, reference may be made to the above relationship between the first time and the second time, which is not repeated herein.

In some embodiments, the performance metric corresponding to the performance monitoring may include at least one of:
prediction accuracy of a beam or a beam pair;
prediction accuracy of a beam or a beam pair for which an L1-RSRP difference is within a first threshold, in which the L1-RSRP difference is a difference between a measured L1-RSRP of a best predicted beam or a best predicted beam pair and a measured L1-RSRP of a measured best beam or a measured best beam pair;
an L1-RSRP difference degree, in which the L1-RSRP difference degree is a difference degree between the measured L1-RSRP of the best predicted beam or the best predicted beam pair and the measured L1-RSRP of the measured best beam or the measured best beam pair; and the L1-RSRP difference degree includes at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, in which the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree includes at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
prediction accuracy for BLER;
prediction accuracy for beam failure time; or
prediction accuracy for a new beam.

In some embodiments, the accurate beam prediction indicates that an ID of a predicted best beam includes an ID of a measured best beam, or the ID of the predicted best beam is included in the ID of the measured best beam.

In some embodiments, the accurate beam pair prediction indicates that an ID of a predicted best beam pair includes an ID of a measured best beam pair, or the ID of the predicted best beam pair is included in the ID of the measured best beam pair.

In some embodiments, an ID of a downlink TX beam may be equivalent to an ID of a reference signal resource. For example, the ID of the downlink TX beam may be an SSB ID, a CSI-RS ID, or a sounding reference signal (SRS) ID. An ID of a downlink RX beam may be a RX beam ID of the terminal. An ID of a beam pair may be an ID corresponding to a combination of a downlink TX beam and a downlink RX beam.

In some embodiments, the best beam may be a beam with the strongest L1-RSRP or the strongest L1-SINR, and the best beam pair may be a beam pair with the strongest L1-RSRP or the strongest L1-SINR.

In some embodiments, the best predicted beam is the best beam obtained via prediction, the best predicted beam pair is the best beam pair obtained via prediction, the measured best beam is the best beam obtained via measurement, and the measured best beam pair is the best beam pair obtained via measurement. The first threshold may be determined based on results of a plurality of derivations of the model; for example, the first threshold may be 1 dB.

In some embodiments, the L1-RSRP difference may be a difference between the measured L1-RSRP of the best predicted beam and the measured L1-RSRP of the measured best beam, or a difference between the measured L1-RSRP of the best predicted beam pair and the measured L1-RSRP of the measured best beam pair.

For example, the prediction accuracy for the beam for which the L1-RSRP difference is within the first threshold may be the accuracy for which the difference between the measured L1-RSRP of the best predicted beam and the measured L1-RSRP of the measured best beam is within 1 dB. The prediction accuracy of the beam pair for which the L1-RSRP difference is within the first threshold may be the accuracy for which the difference between the measured L1-RSRP of the best predicted beam pair and the measured L1-RSRP of the measured best beam pair is within 1 dB.

In some embodiments, the L1-RSRP difference degree may be a difference degree between the measured L1-RSRP of the best predicted beam and the measured L1-RSRP of the measured best beam, or a difference degree between the measured L1-RSRP of the best predicted beam pair and the measured L1-RSRP of the measured best beam pair.

For example, the L1-RSRP difference degree may be an average value of differences between the measured L1-RSRP of the best predicted beam and the measured L1-RSRP of the measured best beam, or an average value of differences between the measured L1-RSRP of the best predicted beam pair and the measured L1-RSRP of the measured best beam pair. The L1-RSRP difference degree may be a cumulative distribution function of the differences between the measured L1-RSRP of the best predicted beam and the measured L1-RSRP of the measured best beam, or a cumulative distribution function of the differences between the measured L1-RSRP of the best predicted beam pair and the measured L1-RSRP of the measured best beam pair. The L1-RSRP difference degree may be a ratio of the difference between the measured L1-RSRP of the best predicted beam and the measured L1-RSRP of the measured best beam being less than or equal to a second threshold, or a ratio of the difference between the measured L1-RSRP of the best predicted beam pair and the measured L1-RSRP of the measured best beam pair being less than or equal to the second threshold. The L1-RSRP difference degree may be a ratio of the difference between the measured L1-RSRP of the best predicted beam and the measured L1-RSRP of the measured best beam being greater than a third threshold, or a ratio of the difference between the measured L1-RSRP of the best predicted beam pair and the measured L1-RSRP of the measured best beam pair being greater than the third threshold.

In some embodiments, the second threshold and the third threshold may be determined based on results of a plurality of derivations of the model.

In some embodiments, the predicted L1-RSRP difference degree may be a difference degree between the predicted L1-RSRP of the best predicted beam and the measured L1-RSRP of the best predicted beam, or a difference degree between the predicted L1-RSRP of the best predicted beam pair and the measured L1-RSRP of the best predicted beam pair.

For example, the predicted L1-RSRP difference degree may be an average value of the predicted L1-RSRP differences between the predicted L1-RSRP of the best predicted beam and the measured L1-RSRP of the best predicted beam, or an average value of the predicted L1-RSRP differences between the predicted L1-RSRP of the best predicted beam pair and the measured L1-RSRP of the best predicted beam pair. The predicted L1-RSRP difference degree may be a cumulative distribution function of the predicted L1-RSRP differences between the predicted L1-RSRP of the best predicted beam and the measured L1-RSRP of the best predicted beam, or a cumulative distribution function of the predicted L1-RSRP differences between the predicted L1-RSRP of the best predicted beam pair and the measured L1-RSRP of the best predicted beam pair. The predicted L1-RSRP difference degree may be a ratio of the predicted L1-RSRP difference between the predicted L1-RSRP of the best predicted beam and the measured L1-RSRP of the best predicted beam being less than or equal to the second threshold, or a ratio of the predicted L1-RSRP difference between the predicted L1-RSRP of the best predicted beam pair and the measured L1-RSRP of the best predicted beam pair being less than or equal to the second threshold. The predicted L1-RSRP difference degree may be a ratio of the predicted L1-RSRP difference between the predicted L1-RSRP of the best predicted beam and the measured L1-RSRP of the best predicted beam being greater than the third threshold, or a ratio of the predicted L1-RSRP difference between the predicted L1-RSRP of the best predicted beam pair and the measured L1-RSRP of the best predicted beam pair being greater than the third threshold.

In some embodiments, SINRs corresponding to two beams or two beam pairs may be determined based on the best predicted beam or the best predicted beam pair and the measured best beam or the measured beam pair, and a capacity value, i.e., the terminal throughput, may be calculated via a Shannon capacity.

In some embodiments, the uplink control information may include signaling overhead of information that the terminal needs to report to the network device during the model performance monitoring. For example, when the second model is deployed on the terminal, the terminal sends a performance value to the network device; when the second model is deployed on the network device, the terminal sends a measurement result of a first reference signal resource to the network device.

In some embodiments, the prediction delay may include a time required for predicting a measurement result via the second model. For example, the prediction delay may include a time period from inputting measurement data into the second model to outputting prediction data by the second model.

In some embodiments, the prediction accuracy for beam failure probability may be determined based on a predicted probability of beam failure.

In some embodiments, the predicted probability of beam failure may be a hard probability. For example, if a beam is predicted to fail and a measured beam also fails, it indicates that the prediction is accurate. If a beam is predicted to fail while a measured beam does not fail, it indicates that the prediction is inaccurate.

In some embodiments, the predicted probability of beam failure may be a soft probability. For example, if the predicted probability of beam failure is greater than a first probability threshold and the measured probability of beam failure is also greater than the first probability threshold, it indicates that the prediction is accurate. If the predicted probability of beam failure is greater than the first probability threshold while the measured probability of beam failure is less than or equal to the first probability threshold, it indicates that the prediction is inaccurate. The first probability threshold may be determined based on results of a plurality of derivations of the model; for example, the first probability threshold may be 50%.

In some embodiments, the difference degree for radio link quality prediction may be a difference between predicted radio link quality at a specified time and measured radio link quality at the specified time.

For example, if a predicted value of radio link quality at the specified time is predicted, a measured value of radio link quality at the specified time may be determined, and a difference between the predicted value and the measured value is the difference degree for radio link quality prediction. If a predicted minimum value of radio link quality within the specified time is predicted, a measured minimum value of radio link quality within the specified time may be determined, and a difference between the predicted minimum value and the measured minimum value is the difference degree for radio link quality prediction.

In some embodiments, the difference degree for BLER prediction may be a difference degree between a predicted BLER and a measured BLER.

For example, if a predicted BLER value of a BLER at the specified time is predicted, a measured BLER value of the BLER at the specified time may be determined, and a difference between the predicted BLER value and the measured BLER value is the difference degree for BLER prediction. If a predicted highest BLER value of the BLER within a specified time is predicted, a measured highest BLER value of the BLER within the specified time may be determined, and a difference between the predicted highest BLER value and the measured highest BLER value is the BLER difference degree.

In some embodiments, the prediction accuracy for beam failure time may be determined based on a predicted beam failure time and a measured beam failure time.

For example, if a difference between the predicted beam failure time (i.e., a predicted time of beam failure) and the measured beam failure time (i.e., a measured time at which beam failure occurs) is less than a threshold, it indicates that the prediction for beam failure time is accurate. If the difference between the predicted time of beam failure and the measured time at which beam failure occurs is greater than or equal to the threshold, it indicates that the prediction for beam failure time is inaccurate.

In some embodiments, the prediction accuracy for the new beam may be determined based on a predicted new beam and a measured new beam.

For example, if beam failure is predicted to occur at the specified time and it is measured that beam failure also occurs at the specified time, it may be determined whether the predicted new beam includes the measured new beam. If it is determined that the predicted new beam includes the measured new beam, it indicates that the prediction for the new beam is accurate. If it is determined that the predicted new beam does not include the measured new beam, it indicates that the prediction for the new beam is inaccurate.

In some embodiments, the L1-RSRP difference may also be an L1-SINR difference, the L1-RSRP difference degree may also be an L1-SINR difference degree, and the predicted L1-RSRP difference degree may also be a predicted L1-SINR difference degree. It should be noted that, for a determination manner of the L1-SINR difference, the L1-SINR difference degree, and the predicted L1-SINR difference degree, reference may be made to the determination manner of the L1-RSRP difference, the L1-RSRP difference degree, and the predicted L1-RSRP difference degree described above, which is not repeated herein.

In some embodiments, the reporting type of the performance monitoring report may include periodic reporting or aperiodic reporting.

In some embodiments, the number of samples included in one performance monitoring report may be understood as a number of samples per reporting instance. For example, if the number of samples included in one performance monitoring report is 5, the performance monitoring report is reported when the number of samples reaches 5. Alternatively, it may be understood that the period for sending a report is 5 times the period for sending a reference signal.

In some embodiments, the model management threshold may be a threshold for managing a model or a functionality. For example, when a performance value is higher than a threshold, the model or the functionality may be activated.

In some embodiments, the first event may be triggered based on the performance value, for example, via a comparison result between the performance value of the performance monitoring and the first threshold. For example, if the performance metric is prediction accuracy for a beam, and the prediction accuracy for the beam corresponding to the performance value is greater than the first threshold, the first event is triggered.

In some embodiments, the first threshold may include at least one of: a first accuracy threshold; a second accuracy threshold; a first difference degree threshold; a second difference degree threshold; a first throughput threshold; a first overhead threshold; a second overhead threshold; a first delay threshold; a third accuracy threshold; a third difference degree threshold; a fourth difference degree threshold; a fourth accuracy threshold; or a fifth accuracy threshold.

In some embodiments, the first threshold may be determined based on results of a plurality of derivations of the model, which is not limited in embodiments of the disclosure.

In some embodiments, for a configuration manner of the first offset value, reference may be made to the configuration manner of the first threshold described above, which is not repeated herein.

At step S2103, the terminal obtains measurement data by performing measurement on the beams in the fourth reference signal resource set based on the first information.

In some embodiments, the terminal may obtain the measurement data by performing measurement on each beam in the fourth reference signal resource set based on the first information.

In some embodiments, the terminal may obtain the measurement data by performing measurement on a reference signal corresponding to each beam in the fourth reference signal resource set.

In some embodiments, the name of the measurement data is not limited, and may be, for example, "model input data", "actual measurement data", "actual measurement result", etc.

In some embodiments, the measurement data may include at least one of:
L1-RSRPs of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a BLER of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

In some embodiments, the preset link quality threshold may be specified by a protocol, which is not limited in embodiments of the disclosure.

In some embodiments, the best K beams may be the first K beams among a plurality of beams of the fourth reference signal resource set arranged in descending order of beam quality.

In some embodiments, the measurement data may further include IDs of the best K beams measured in the fourth reference signal resource set, L1-RSRPs corresponding to the IDs of the best K beams measured in the fourth reference signal resource set, and an L1-RSRP corresponding to an ID of each beam measured in the fourth reference signal resource set.

In some embodiments, the measurement data may further include beam IDs of the best K beams measured in the fourth reference signal resource set.

In some embodiments, the above L1-RSRP may also be L1-SINR.

In some embodiments, the fifth time may be any specified time, which is not limited in embodiments of the disclosure.

In some embodiments, the radio link quality may include a signal-to-noise ratio (SNR), SINR, etc.

In some embodiments, a BLER corresponding to the radio link quality may be obtained. If the BLER is higher than the preset link quality threshold, it indicates beam failure occurs.

In some embodiments, the probability that the radio link quality of each of the best K beams measured within the fifth time is less than or equal to the preset link quality threshold may include a hard probability.

For example, if it is determined that the BLER is higher than the preset link quality threshold, the probability is 1; if it is determined that the BLER is lower than or equal to the preset link quality threshold, the probability is 0.

In some embodiments, the probability that the radio link quality of each of the best K beams measured within the fifth time is less than or equal to the preset link quality threshold may include a soft probability.

For example, if it is determined that when the BLER is higher than the preset link quality threshold, a difference between the BLER and the preset link quality threshold is greater than a threshold, the probability is 1, otherwise the probability is 80%. If it is determined that when the BLER is lower than the preset link quality threshold, the difference between the BLER and the preset link quality threshold is greater than the threshold, the probability is 0, otherwise the probability is 30%.

In some embodiments, if the highest value of the BLER is greater than a threshold, it indicates that beam failure may occur.

At step S2104, the terminal obtains the measurement data by performing measurement on the beams in the third reference signal resource set based on the first information.

In some embodiments, the terminal may obtain the measurement data by performing measurement on each beam in the third reference signal resource set based on the first information.

In some embodiments, the terminal may obtain the measurement data by performing measurement on a reference signal corresponding to each beam in the third reference signal resource set.

In some embodiments, the measurement data may include at least one of:
L1-RSRPs of best K beams measured in the third reference signal resource set; or
an L1-RSRP of each beam measured in the third reference signal resource set.

In some embodiments, the best K beams may be the first K beams among a plurality of beams of the third reference signal resource set arranged in descending order of beam quality.

In some embodiments, the measurement data may further include IDs of the best K beams measured in the third reference signal resource set, L1-RSRPs corresponding to the IDs of the best K beams measured in the third reference signal resource set, and an L1-RSRP corresponding to an ID of each beam measured in the third reference signal resource set.

In some embodiments, the above L1-RSRP may also be L1-SINR.

At step S2105, the terminal obtains the prediction data based on the measurement data corresponding to the third reference signal resource set.

In some embodiments, the terminal may obtain the prediction data output by the second model, by inputting the measurement data corresponding to the third reference signal resource set into a second model.

For example, the terminal may perform prediction based on configuration information. For example, the terminal may obtain a prediction result by performing prediction using the second model based on the configuration information. The configuration information may be information predefined by a protocol, or the configuration information may be information configured by the terminal, or the configuration information may also be information received by the terminal from the network device, for example, configuration information determined and sent to the terminal by the network device.

In some embodiments, the prediction data may include at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of the radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

It should be noted that, for the description of the above prediction data, reference may be made to the description of the measurement data in step S2103 above, which is not repeated herein.

In some embodiments, the name of the prediction data is not limited, and may be, for example, "model output data", "model output result", "prediction result", etc.

At step S2106, the terminal sends a performance monitoring report to the network device.

In some embodiments, the network device may receive the performance monitoring report. For example, the network device may receive the performance monitoring report sent by the terminal. For another example, the network device may also receive a performance monitoring report sent by another entity.

In some embodiments, the name of the performance monitoring report is not limited, and may be, for example, "performance report", "monitoring result", "monitoring report", "model monitoring report", "model performance monitoring report", etc.

In some embodiments, the performance monitoring report may include at least one of:
measurement data;
prediction data;
a performance value of the second model, in which the performance value is determined based on the measurement data and the prediction data;
the first event, in which the first event is triggered based on a comparison result between the performance value of the second model and the first threshold or the first offset value; or
first operation information, in which the first operation information indicates a management operation on the second model, and the management operation includes whether to activate the second model.

In some embodiments, the performance value may include at least one of:
accuracy of a predicted beam or a predicted beam pair;
prediction accuracy of a beam or a beam pair for which the L1-RSRP difference is within the first threshold;
a first L1-RSRP difference degree, in which the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, in which the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
prediction accuracy for beam failure probability;
a difference degree for radio link quality prediction, in which the difference degree for radio link quality prediction is a difference degree between predicted radio link quality and measured radio link quality;
a difference degree for BLER prediction, in which the difference degree for BLER prediction is a difference degree between a predicted BLER and a measured BLER;
prediction accuracy for beam failure time; or
prediction accuracy for a new beam.

In some embodiments, the first event includes at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

In some embodiments, the first event may be triggered based on a comparison result between the performance value of the second model and the first threshold or the first offset value.

For example, the performance value of the second model includes accuracy of a predicted beam. If it is determined that the accuracy of the predicted beam is greater than the first accuracy threshold, the first event is triggered.

In some embodiments, the first operation information may be determined based on a comparison result between the performance value of the second model and a threshold for operation management. For example, if the terminal determines to activate the second model based on the performance value of the second model, the first operation information is activating the second model. If the terminal determines not to activate the second model based on the performance value of the second model, the first operation information is not activating the second model, or the first operation information is not reported.

In some embodiments, if it is determined, based on the comparison result between the performance value of the second model and the threshold for operation management, that the model performance satisfies a first condition, it is determined to activate the second model.

In some embodiments, the first condition may be that the second model may be used or the second model satisfies a performance requirement. For example, if the first condition is satisfied, the second model may be used by the terminal. If the first condition is not satisfied, the second model cannot be used by the terminal.

For example, the first condition may be any condition that is capable of triggering the first event.

In some embodiments, after obtaining the measurement data and the prediction data, the terminal may send, to the network device, a performance monitoring report including the measurement data and the prediction data.

In some embodiments, after obtaining the measurement data and the prediction data, the terminal may determine the performance value of the second model based on the measurement data and the prediction data, and send, to the network device, a performance monitoring report including the performance value of the second model.

In some embodiments, the terminal may determine to trigger the first event based on the performance value of the second model and the first threshold, and send, to the network device, a performance monitoring report including the first event.

In some embodiments, the terminal may determine the first operation information based on the performance value of the second model, and send, to the network device, a performance monitoring report including the first operation information.

It should be noted that the above manner of sending the performance monitoring report to the network device is an exemplary illustration, and a performance monitoring report including a plurality of pieces of information may also be sent at one time, which is not limited in embodiments of the disclosure.

At step S2107, the network device determines to activate the second model based on the performance monitoring report.

In some embodiments, after receiving the performance monitoring report sent by the terminal, the network device may determine, based on at least one item in the performance monitoring report, whether to activate the second model.

In some embodiments, the network device may determine, based on the first operation information in the performance monitoring report, whether to activate the second model.

For example, if the first operation information instructs to activate the second model, the network device may determine to activate the second model. If the first operation information instructs not to activate the second model, the network device may determine not to activate the second model.

In some embodiments, the network device may determine, based on the first event in the performance monitoring report, whether to activate the second model.

For example, if the performance monitoring report includes any first event, the network device may determine to activate the second model. If the performance monitoring report does not include the first event, the network device may determine not to activate the second model.

In some embodiments, the network device may determine, based on the performance value in the performance monitoring report, whether to activate the second model.

It should be noted that the above description of the network device determining whether to activate the second model is an exemplary illustration, which is not limited in embodiments of the disclosure.

At step S2108, the network device sends an activation command to the terminal.

In some embodiments, the terminal may receive the activation command. For example, the terminal may receive the activation command sent by the network device. For another example, the terminal may also receive an activation command sent by another entity.

In some embodiments, the activation command may be used for the terminal to activate the second model.

In some embodiments, the activation command may be used to indicate whether the second model may be used by the terminal.

In some embodiments, the activation command may indicate whether the terminal is capable of using the second model.

In some embodiments, if the network device determines to activate the second model, the network device may send the activation command.

In some embodiments, if the network device determines not to activate the second model, the network device may not send the activation command.

In some embodiments, the activation command may be a model ID or a functionality ID of the second model.

At step S2109, the terminal activates the second model based on the activation command.

In some embodiments, the terminal may activate the second model based on the activation command.

In some embodiments, the terminal may activate the second model based on the model ID or the functionality ID included in the activation command.

By adopting the above method, the terminal may request to monitor performance of the model deployed on the terminal before activating the model, and activate the model when it is determined that the performance of the model satisfies the activation condition. This allows for achieving more accurate prediction results during the use of the model, thus improving the network performance.

The method in embodiments of the disclosure may include at least one of steps S2101 to S2108. For example, the step S2101 may be performed as an independent embodiment; the step S2102 may be performed as an independent embodiment; the step S2101 and the step S2102 may be performed as an independent embodiment; the step S2102, the step S2103 and the step S2104 may be performed as an independent embodiment; the step S2102, the step S2103, the step S2104 and the step S2105 may be performed as an independent embodiment; the step S2102, the step S2103, the step S2104 and the step S2106 may be performed as an independent embodiment; and the step S2102, the step S2103, the step S2104, the step S2107 and the step S2108 may be performed as an independent embodiment, which is not limited herein.

In some embodiments, the steps S2101 to S2108 may be exchanged in order or performed simultaneously. For example, the step S2103 and the step S2104 may be exchanged in order or performed simultaneously.

In some embodiments, the steps S2101 to S2108 are all optional steps. For example, the step S2101, the step S2102, the step S2104, the step S2105, the step S2107 and the step S2108 are optional steps, and one or more of the steps may be omitted or substituted in different embodiments. For example, the step S2101, the step S2105, the step S2106 and the step S2107 are optional steps, and one or more of the steps may be omitted or substituted in different embodiments.

In some embodiments, reference may be made to other optional implementations described before or after the embodiments corresponding to FIG. 2A.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "transmit", "report", "issue", "transmit", "bidirectionally transmit", "send and/or receive" or the like may be used interchangeably.

In some embodiments, the terms such as "certain", "predetermined", "preset", "set", "indicated", "a", "any", "first", or the like may be used interchangeable. "Certain A", "predetermined A", "preset A", "set A", "indicated A", "an A", "any A", "first A" may be interpreted as A predefined in a protocol, or as A obtained via setting, configuration, or indication, or as certain A, an A, any A, or first A, etc., but is not limited herein.

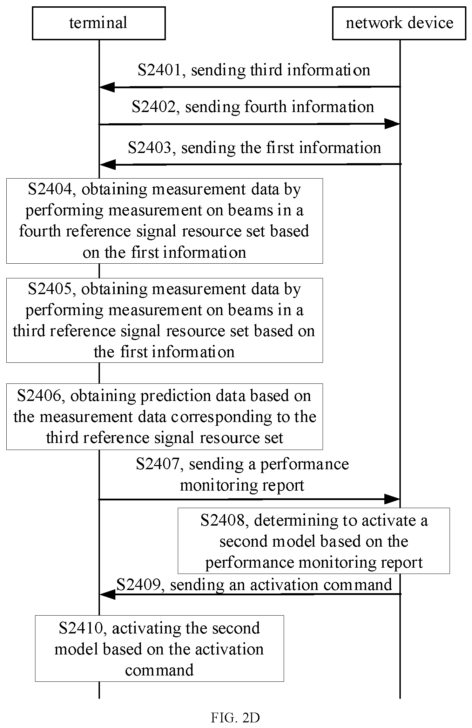

FIG. 2D is a flowchart illustrating a method for model performance monitoring according to an embodiment of the disclosure. The method may be performed by the above communication system. As shown in FIG. 2D, the method may include the following steps S2401 to S2410.

At step S2401, a network device sends third information to a terminal.

In some embodiments, the terminal may receive the third information. For example, the terminal may receive the third information sent by the network device. For another example, the terminal may also receive third information sent by another entity.

In some embodiments, the third information may be configured to request performance monitoring of a second model.

In some embodiments, the third information may be configured to instruct the network device to perform performance monitoring of the second model.

In some embodiments, the third information may be configured to trigger the network device to perform performance monitoring of the second model.

In some embodiments, the third information may be configured to request the network device to send first information.

In some embodiments, the third information may be configured to instruct the network device to send the first information.

In some embodiments, the third information may be configured to trigger the network device to send the first information.

In some embodiments, the name of the third information is not limited, and may be, for example, "request information for model performance monitoring", "indication information for model performance monitoring", "request information for functionality performance monitoring", "indication information for functionality performance monitoring", etc.

In some embodiments, the second model may be an inactive model.

In some embodiments, the second model may be deployed on the terminal.

In some embodiments, the second model may be one or more models.

In some embodiments, the second model may correspond to one or more functionalities.

In some embodiments, the second model may be used for CSI compression, CSI prediction, spatial domain beam prediction, time domain beam prediction, beam failure information prediction, positioning, etc.

In some embodiments, before instructing the terminal to activate the second model, the network device may send the third information to the terminal, to request performance monitoring of the second model, and instruct the terminal to activate the second model in the case of determining, based on a result of the performance monitoring, that a performance state of the second model is good.

At step S2402, the terminal sends fourth information to the network device.

In some embodiments, the network device may receive the fourth information. For example, the network device may receive the fourth information sent by the terminal. For another example, the network device may also receive fourth information sent by another entity.

In some embodiments, the fourth information may be configured to indicate an agreement to the request of the third information.

In some embodiments, if the terminal determines, based on the third information, that it is agreed to perform performance monitoring of the second model, the terminal may send the fourth information to the network device.

In some embodiments, if the terminal determines, based on the third information, that it is not agreed to perform performance monitoring of the second model, the terminal may not send the fourth information to the network device.

In some embodiments, the fourth information may be the same as the second information in the above step S2101, or may be different from the second information, which is not limited in embodiments of the disclosure.

At step S2403, the network device sends the first information to the terminal.

For optional implementations of step S2403, reference may be made to the optional implementations of step S2102 in FIG. 2A and other related parts in the embodiments involved in FIG. 2A, which is not repeated herein.

In some embodiments, the terminal may receive the first information. For example, the terminal may receive the first information sent by the network device. For another example, the terminal may also receive first information sent by another entity.

In some embodiments, the network device may send the first information to the terminal based on the fourth information.

In some embodiments, the network device may send the first information to the terminal based on pre-configured resource configuration information for performing performance monitoring of the second model.

At step S2404, the terminal obtains measurement data by performing measurement on beams a the fourth reference signal resource set based on the first information.

For optional implementations of step S2404, reference may be made to the optional implementations of step S2103 in FIG. 2A and other related parts in the embodiments involved in FIG. 2A, which is not repeated herein.

At step S2405, the terminal obtains measurement data by performing measurement on beams in a third reference signal resource set based on the first information.

For optional implementations of step S2405, reference may be made to the optional implementations of step S2104 in FIG. 2A and other related parts in the embodiments involved in FIG. 2A, which is not repeated herein.

At step S2406, the terminal obtains prediction data based on the measurement data corresponding to the third reference signal resource set.

For optional implementations of step S2406, reference may be made to the optional implementations of step S2105 in FIG. 2A and other related parts in the embodiments involved in FIG. 2A, which is not repeated herein.

At step S2407, the terminal sends a performance monitoring report to the network device.

For optional implementations of step S2407, reference may be made to the optional implementations of step S2106 in FIG. 2A and other related parts in the embodiments involved in FIG. 2A, which is not repeated herein.

At step S2408, the network device determines to activate the second model based on the performance monitoring report.

For optional implementations of step S2408, reference may be made to the optional implementations of step S2107 in FIG. 2A and other related parts in the embodiments involved in FIG. 2A, which is not repeated herein.

At step S2409, the network device sends an activation command to the terminal.

For optional implementations of step S2409, reference may be made to the optional implementations of step S2108 in FIG. 2A and other related parts in the embodiments involved in FIG. 2A, which is not repeated herein.

At step S2410, the terminal activates the second model based on the activation command.

For optional implementations of step S2410, reference may be made to the optional implementations of step S2109 in FIG. 2A and other related parts in the embodiments involved in FIG. 2A, which is not repeated herein.

In some embodiments, the network device may request to monitor performance of the model deployed on the terminal before instructing activation of the model, and activate the model when it is determined that the performance of the model satisfies the activation condition. This allows for achieving more accurate prediction results during the use of the model, thus improving the network performance.

The method in embodiments of the disclosure may include at least one of steps S2401 to S2410. For example, the step S2401 may be performed as an independent embodiment; the step S2403 may be performed as an independent embodiment; the step S2401 and the step S2403 may be performed as an independent embodiment; the step S2401, the step S2403, the step S2404 and the step S2405 may be performed as an independent embodiment; the step S2401, the step S2403, the step S2404, the step S2405 and the step S2406 may be performed as an independent embodiment; the step S2401, the step S2403, the step S2404, the step S2405 and the step S2407 may be performed as an independent embodiment; and the step S2401, the step S2403, the step S2404, the step S2405, the step S2407, the step S2408 and the step S2409 may be performed as an independent embodiment, which is not limited herein.

In some embodiments, the steps S2401 to S2410 may be exchanged in order or performed simultaneously. For example, the step S2404 and the step S2405 may be exchanged in order or performed simultaneously.

In some embodiments, the steps S2401 to S2410 are all optional steps. For example, the step S2402, the step S2405, the step S2407, the step S2408 and the step S2410 are optional steps, and one or more of the steps may be omitted or substituted in different embodiments. For example, the step S2402, the step S2407, the step S2408, the step S2409 and the step S2410 are optional steps, and one or more of the steps may be omitted or substituted in different embodiments.

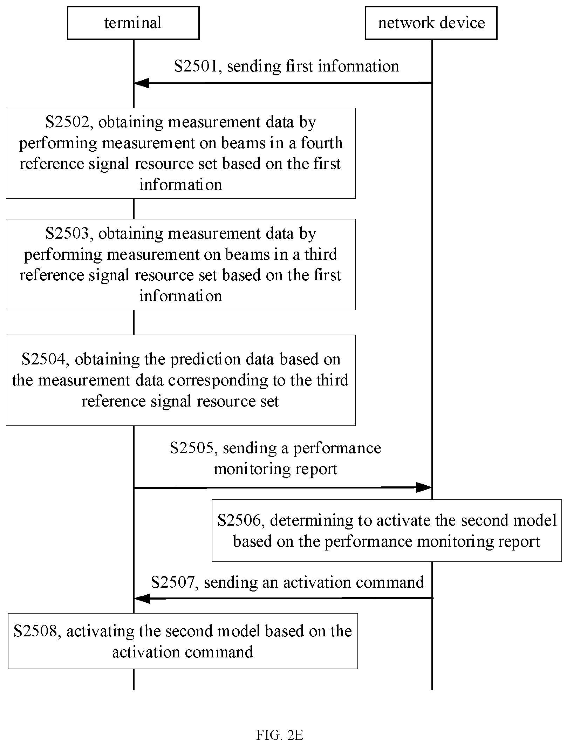

FIG. 2E is a flowchart illustrating a method for model performance monitoring according to an embodiment of the disclosure. The method may be performed by the above communication system. As shown in FIG. 2E, the method may include the following steps S2501 to S2508.

At step S2501, a network device sends first information to a terminal.

For optional implementations of step S2501, reference may be made to the optional implementations of step S2102 in FIG. 2A and other related parts in the embodiments involved in FIG. 2A, which is not repeated herein.

In some embodiments, the terminal may receive the first information. For example, the terminal may receive the first information sent by the network device. For another example, the terminal may also receive first information sent by another entity.

In some embodiments, the first information may be configured to determine performance monitoring of a first model.

In some embodiments, the first model may be deployed on the terminal.

In some embodiments, the network device may actively send the first information to the terminal.

In some embodiments, "the network device actively sends the first information to the terminal" may be interpreted as that the network device sends the first information to the terminal without receiving second information from the terminal.

In some embodiments, "the network device actively sends the first information to the terminal" may also be interpreted as that the network device sends the first information to the terminal without sending third information to the terminal.

In some embodiments, "the network device actively sends the first information to the terminal" may also be interpreted as that the network device sends the first information to the terminal without receiving any trigger information.

At step S2502, the terminal obtains measurement data by performing measurement on beams in a fourth reference signal resource set based on the first information.

For optional implementations of step S2502, reference may be made to the optional implementations of step S2103 in FIG. 2A and other related parts in the embodiments involved in FIG. 2A, which is not repeated herein.

At step S2503, the terminal obtains measurement data by performing measurement on beams in a third reference signal resource set based on the first information.

For optional implementations of step S2503, reference may be made to the optional implementations of step S2104 in FIG. 2A and other related parts in the embodiments involved in FIG. 2A, which is not repeated herein.

At step S2504, the terminal obtains prediction data based on the measurement data corresponding to the third reference signal resource set.

For optional implementations of step S2504, reference may be made to the optional implementations of step S2105 in FIG. 2A and other related parts in the embodiments involved in FIG. 2A, which is not repeated herein.

At step S2505, the terminal sends a performance monitoring report to the network device.

For optional implementations of step S2505, reference may be made to the optional implementations of step S2106 in FIG. 2A and other related parts in the embodiments involved in FIG. 2A, which is not repeated herein.

At step S2506, the network device determines to activate the second model based on the performance monitoring report.

For optional implementations of step S2506, reference may be made to the optional implementations of step S2107 in FIG. 2A and other related parts in the embodiments involved in FIG. 2A, which is not repeated herein.

At step S2507, an activation command is sent to the terminal.

For optional implementations of step S2507, reference may be made to the optional implementations of step S2108 in FIG. 2A and other related parts in the embodiments involved in FIG. 2A, which is not repeated herein.

At step S2508, the terminal activates the second model based on the activation command.

For optional implementations of step S2508, reference may be made to the optional implementations of step S2109 in FIG. 2A and other related parts in the embodiments involved in FIG. 2A, which is not repeated herein.

In some embodiments, the network device may request to monitor performance of the model deployed on the terminal before instructing activation of the model, and activate the model when it is determined that the performance of the model satisfies the activation condition. This allows for achieving more accurate prediction results during the use of the model, thus improving the network performance.

The method in embodiments of the disclosure may include at least one of steps S2501 to S2508. For example, the step S2501 may be performed as an independent embodiment; the step S2507 may be performed as an independent embodiment; the step S2501, the step S2502, the step S2503 and the step S2504 may be performed as an independent embodiment; the step S2501, the step S2503, the step S2504 and the step S2505 may be performed as an independent embodiment; the step S2501, the step S2502, the step S2503 and the step S2505 may be performed as an independent embodiment; and the step S2501, the step S2502, the step S2503, the step S2504 and the step S2505 may be performed as an independent embodiment, which is not limited herein.

In some embodiments, the steps S2501 to S2508 may be exchanged in order or performed simultaneously. For example, the step S2502 and the step S2503 may be exchanged in order or performed simultaneously.

In some embodiments, the steps S2501 to S2508 are all optional steps. For example, the step S2503, the step S2504, the step S2505, the step S2506 and the step S2507 are optional steps, and one or more of the steps may be omitted or substituted in different embodiments. For example, the step S2503, the step S2504 and the step S2508 are optional steps, and one or more of the steps may be omitted or substituted in different embodiments.

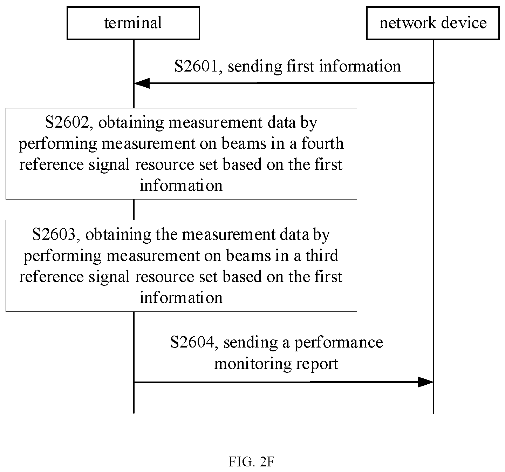

FIG. 2F is a flowchart illustrating a method for model performance monitoring according to an embodiment of the disclosure. The method may be performed by the above communication system. As shown in FIG. 2F, the method may include the following steps S2601 to S2604.

At step S2601, a network device sends first information to a terminal.

For optional implementations of step S2601, reference may be made to the optional implementations of step S2102 in FIG. 2A and other related parts in the embodiments involved in FIG. 2A, which is not repeated herein.

In some embodiments, the first information may be configured to determine performance monitoring of a first model.

In some embodiments, the first model may be deployed on the network device.

In some embodiments, the network device determines that performance monitoring of a second model is required, and sends the first information to the terminal.

At step S2602, the terminal obtains measurement data by performing measurement on beams in a fourth reference signal resource set based on the first information.

For optional implementations of step S2602, reference may be made to the optional implementations of step S2103 in FIG. 2A and other related parts in the embodiments involved in FIG. 2A, which is not repeated herein.

At step S2603, the terminal obtains measurement data by performing measurement on beams in a third reference signal resource set based on the first information.

For optional implementations of step S2603, reference may be made to the optional implementations of step S2104 in FIG. 2A and other related parts in the embodiments involved in FIG. 2A, which is not repeated herein.

At step S2604, the terminal sends a performance monitoring report to the network device.

In some embodiments, the performance monitoring report may include the measurement data.

In some embodiments, after receiving the performance monitoring report, the network device may send response information to the terminal, or may not send the response information to the terminal, in which the response information is used to inform the terminal whether the network device activates the first model.

For optional implementations of step S2604, reference may be made to the optional implementations of step S2106 in FIG. 2A and other related parts in the embodiments involved in FIG. 2A, which is not repeated herein.

In some embodiments, the network device may request to monitor performance of the model deployed on the network device before instructing activation of the model, and activate the model when it is determined that the performance of the model satisfies the activation condition. This allows for achieving more accurate prediction results during the use of the model, thus improving the network performance.

The method in embodiments of the disclosure may include at least one of steps S2601 to S2604. For example, the step S2601 may be performed as an independent embodiment; the step S2604 may be performed as an independent embodiment; the step S2601, the step S2602 and the step S2604 may be performed as an independent embodiment; and the step S2601, the step S2603 and the step S2604 may be performed as an independent embodiment, which is not limited herein.

In some embodiments, the steps S2601 to S2604 may be exchanged in order or performed simultaneously. For example, the step S2602 and the step S2603 may be exchanged in order or performed simultaneously.

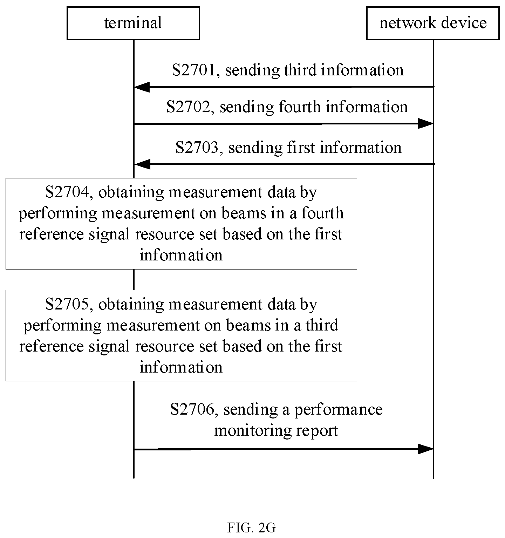

FIG. 2G is a flowchart illustrating a method for model performance monitoring according to an embodiment of the disclosure. The method may be performed by the above communication system. As shown in FIG. 2G, the method may include the following steps S2701 to S2706.

At step S2701, a network device sends third information to a terminal.

For optional implementations of step S2701, reference may be made to the optional implementations of step S2102 in FIG. 2A and other related parts in the embodiments involved in FIG. 2A, which is not repeated herein.

In some embodiments, the third information may be configured to request performance monitoring of a second model.

In some embodiments, the second model may be deployed on the network device.

At step S2702, the terminal sends fourth information to the network device.

For optional implementations of step S2702, reference may be made to the optional implementations of step S2402 in FIG. 2D and other related parts in the embodiments involved in FIG. 2D, which is not repeated herein.

At step S2703, the network device sends first information to the terminal.

For optional implementations of step S2703, reference may be made to the optional implementations of step S2102 in FIG. 2A and other related parts in the embodiments involved in FIG. 2A, which is not repeated herein.

In some embodiments, the terminal may receive the first information. For example, the terminal may receive the first information sent by the network device. For another example, the terminal may also receive first information sent by another entity.

In some embodiments, the network device may send the first information to the terminal based on the fourth information.

In some embodiments, the network device may send the first information to the terminal based on pre-configured resource configuration information for performing performance monitoring of the second model.

In some embodiments, the first information may be configured to determine performance monitoring of the second model.

In some embodiments, the second model is deployed on the network device, and the first information sent by the network device to the terminal may not include a model ID or a functionality ID of the second model.

At step S2704, the terminal obtains measurement data by performing measurement on beams in a fourth reference signal resource set based on the first information.

For optional implementations of step S2704, reference may be made to the optional implementations of step S2103 in FIG. 2A and other related parts in the embodiments involved in FIG. 2A, which is not repeated herein.

At step S2705, the terminal obtains measurement data by performing measurement on beams in a third reference signal resource set based on the first information.

For optional implementations of step S2705, reference may be made to the optional implementations of step S2104 in FIG. 2A and other related parts in the embodiments involved in FIG. 2A, which is not repeated herein.

At step S2706, the terminal sends a performance monitoring report to the network device.

In some embodiments, the performance monitoring report may include the measurement data.

For optional implementations of step S2706, reference may be made to the optional implementations of step S2106 in FIG. 2A and other related parts in the embodiments involved in FIG. 2A, which is not repeated herein.

In some embodiments, input data of the second model deployed on the network device may include at least one of:
in a case that the second model is a beam information prediction model, the input data may include IDs of beams or IDs of beam pairs in the third reference signal resource set, and L1-RSRPs corresponding to the beams or the beam pairs in the third reference signal resource set; for time domain beam prediction, the input data may further include measurement data at a plurality of historical measurement times;
in a case that the second model is a beam failure information prediction model, and the beam failure information prediction model and the beam information prediction model are the same model, the input data may be a fifth time; or
in a case that the second model is the beam failure information prediction model, and the beam failure information prediction model and the beam information prediction model are not the same model, the input data may include at least one of:
at least one of L1-RSRPs, L1-SINRs, beam IDs or beam pair IDs (a reference signal resource ID and/or a RX beam ID) of predicted best K beams, or at least one of L1-RSRPs, L1-SINRs, beam or beam pair IDs (a reference signal resource ID and/or a RX beam ID) of measured best K beams;
an L1-RSRP or an L1-SINR of each beam in a measured fourth reference signal resource set, or an L1-RSRP or an L1-SINR of each beam in a predicted fourth reference signal resource set;
an L1-RSRP or an L1-SINR of a specified beam in the fourth reference signal resource set measured within a fifth time, or an L1-RSRP or an L1-SINR of a specified beam in the fourth reference signal resource set predicted within the fifth time;
at least one of an L1-RSRP, an L1-SINR, a beam ID or a beam pair ID (a reference signal resource ID and/or a RX beam ID) of a randomly selected beam in the measured fourth reference signal resource set, or at least one of an L1-RSRP, an L1-SINR, a beam ID or a beam pair ID (a reference signal resource ID and/or a RX beam ID) of a randomly selected beam in the predicted fourth reference signal resource set; or
the fifth time.

It should be noted that each beam may correspond to one reference signal resource, each beam ID may have a one-to-one correspondence with a reference signal resource ID, and the beam ID may also be the reference signal resource ID.

In some embodiments, after receiving the performance monitoring report, the network device may send response information to the terminal, or may not send the response information to the terminal, in which the response information is used to inform the terminal whether the network device activates the first model.

In some embodiments, the network device may request to monitor performance of the model deployed on the network device before instructing activation of the model, and activate the model when it is determined that the performance of the model satisfies the activation condition. This allows for achieving more accurate prediction results during the use of the model, thus improving the network performance.

The method in embodiments of the disclosure may include at least one of steps S2701 to S2704. For example, the step S2701 may be performed as an independent embodiment; the step S2704 may be performed as an independent embodiment; the step S2701, the step S2702 and the step S2704 may be performed as an independent embodiment; and the step S2701, the step S2703 and the step S2704 may be performed as an independent embodiment, which is not limited herein.

In some embodiments, the steps S2701 to S2704 may be exchanged in order or performed simultaneously. For example, the step S2702 and the step S2703 may be exchanged in order or performed simultaneously.

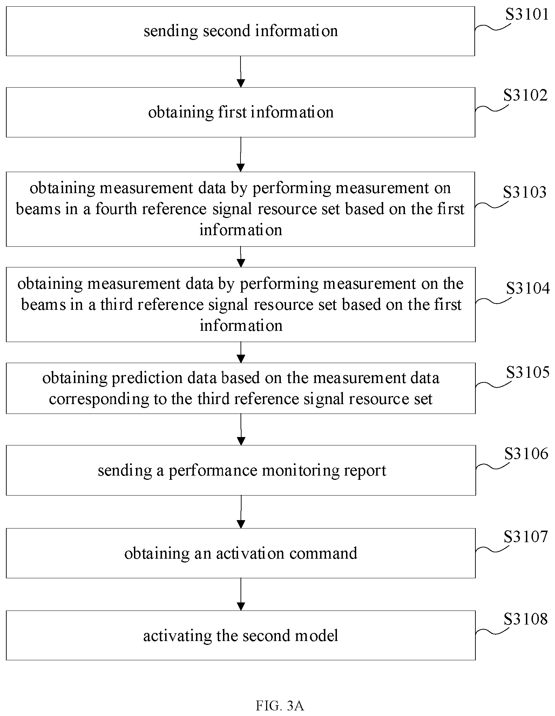

FIG. 3A is a flowchart illustrating a method for model performance monitoring according to an embodiment of the disclosure. As shown in FIG. 3A, embodiments of the disclosure relates to a method for model performance monitoring. The method is performed by a terminal. The method may include the following steps S3101 to S3108.

At step S3101, second information is sent.

For optional implementations of step S3101, reference may be made to the optional implementations of step S2101 in FIG. 2A and other related parts in the embodiments involved in FIG. 2A, which is not repeated herein.

In some embodiments, the terminal may send the second information to a network device, but is not limited herein; the terminal may also send the second information to another entity.

In some embodiments, the second information may be configured to request performance monitoring of a first model.

At step S3102, first information is obtained.

For optional implementations of step S3102, reference may be made to the optional implementations of step S2102 in FIG. 2A and other related parts in the embodiments involved in FIG. 2A, which is not repeated herein.

In some embodiments, the first information may be configured to determine performance monitoring of the first model.

In some embodiments, the terminal may receive the first information sent by the network device, but is not limited herein; the terminal may also receive first information sent by another entity.

In some embodiments, the terminal may obtain first information specified by a protocol.

At step S3103, measurement data is obtained by performing measurement on beams in a fourth reference signal resource set based on the first information.

For optional implementations of step S3103, reference may be made to the optional implementations of step S2103 in FIG. 2A and other related parts in the embodiments involved in FIG. 2A, which is not repeated herein.

At step S3104, measurement data is obtained by performing measurement on beams in a third reference signal resource set based on the first information.

For optional implementations of step S3104, reference may be made to the optional implementations of step S2104 in FIG. 2A and other related parts in the embodiments involved in FIG. 2A, which is not repeated herein.

At step S3105, prediction data is obtained based on the measurement data corresponding to the third reference signal resource set.

For optional implementations of step S3105, reference may be made to the optional implementations of step S2105 in FIG. 2A and other related parts in the embodiments involved in FIG. 2A, which is not repeated herein.

At step S3106, a performance monitoring report is sent.

For optional implementations of step S3106, reference may be made to the optional implementations of step S2106 in FIG. 2A and other related parts in the embodiments involved in FIG. 2A, which is not repeated herein.

At step S3107, an activation command is obtained.

For optional implementations of step S3107, reference may be made to the optional implementations of step S2108 in FIG. 2A and other related parts in the embodiments involved in FIG. 2A, which is not repeated herein.

In some embodiments, the activation command may be configured to activate a second model.

In some embodiments, the terminal may receive the activation command sent by the network device, but is not limited herein; the terminal may also receive an activation command sent by another entity.

In some embodiments, step S3102 may be omitted, and the network device may autonomously implement a function indicated by the first information, or the above function may be absent or default.

At step S3108, the second model is activated.

For optional implementations of step S3108, reference may be made to the optional implementations of step S2109 in FIG. 2A and other related parts in the embodiments involved in FIG. 2A, which is not repeated herein.

The method in embodiments of the disclosure may include at least one of steps S3101 to S3108. For example, the step S3101 may be performed as an independent embodiment; the step S3101 and the step S3102 may be performed as an independent embodiment; the step S3102, the step S3103, the step S3104 and the step S3106 may be performed as an independent embodiment; and the step S3102, the step S3103, the step S3104, the step S3105 and the step S3106 may be performed as an independent embodiment, which is not limited herein.

In some embodiments, the steps S3101 to S3108 may be exchanged in order or performed simultaneously. For example, the step S3103 and the step S3104 may be exchanged in order or performed simultaneously.

In some embodiments, the steps S3101 to S3108 are all optional steps. For example, the step S3101, the step S3105, the step S3107 and the step S3108 are optional steps, and one or more of the steps may be omitted or substituted in different embodiments.

In some embodiments, reference may be made to other optional implementations described before or after the embodiments corresponding to FIG. 3A.

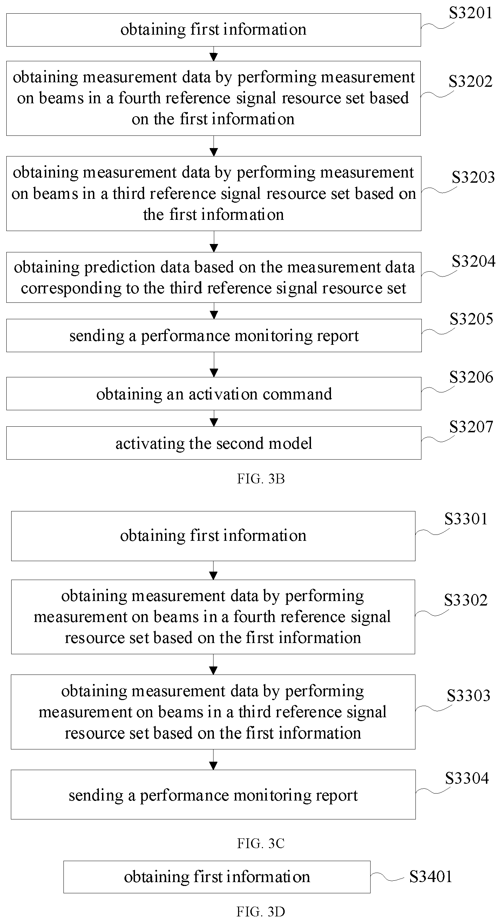

FIG. 3B is a flowchart illustrating a method for model performance monitoring according to an embodiment of the disclosure. As shown in FIG. 3B, embodiments of the disclosure relates to a method for model performance monitoring. The method is performed by a terminal. The method may include the following steps S3201 to S3207.

At step S3201, first information is obtained.

For optional implementations of step S3201, reference may be made to the optional implementations of step S2102 in FIG. 2A and step S3102 in FIG. 3A, and other related parts in the embodiments involved in FIG. 2A and FIG. 3A, which is not repeated herein.

At step S3202, measurement data is obtained by performing measurement on beams in a fourth reference signal resource set based on the first information.

For optional implementations of step S3202, reference may be made to the optional implementations of step S2103 in FIG. 2A and step S3103 in FIG. 3A, and other related parts in the embodiments involved in FIG. 2A and FIG. 3A, which is not repeated herein.

At step S3203, measurement data is obtained by performing measurement on beams in a third reference signal resource set based on the first information.

For optional implementations of step S3203, reference may be made to the optional implementations of step S2104 in FIG. 2A and step S3104 in FIG. 3A, and other related parts in the embodiments involved in FIG. 2A and FIG. 3A, which is not repeated herein.

At step S3204, prediction data is obtained based on the measurement data corresponding to the third reference signal resource set.

For optional implementations of step S3204, reference may be made to the optional implementations of step S2105 in FIG. 2A and step S3105 in FIG. 3A, and other related parts in the embodiments involved in FIG. 2A and FIG. 3A, which is not repeated herein.

At step S3205, a performance monitoring report is sent.

For optional implementations of step S3205, reference may be made to the optional implementations of step S2106 in FIG. 2A and step S3106 in FIG. 3A, and other related parts in the embodiments involved in FIG. 2A and FIG. 3A, which is not repeated herein.

At step S3206, an activation command is obtained.

For optional implementations of step S3206, reference may be made to the optional implementations of step S2108 in FIG. 2A and step S3107 in FIG. 3A, and other related parts in the embodiments involved in FIG. 2A and FIG. 3A, which is not repeated herein.

In some embodiments, the activation command may be configured to activate a second model.

In some embodiments, the terminal may receive the activation command sent by the network device, but is not limited herein; the terminal may also receive an activation command sent by another entity.

In some embodiments, step S3202 may be omitted, and the network device may autonomously implement a function indicated by the first information, or the above function may be absent or default.

At step S3207, the second model is activated.

For optional implementations of step S3207, reference may be made to the optional implementations of step S2109 in FIG. 2A and step S3108 in FIG. 3A, and other related parts in the embodiments involved in FIG. 2A and FIG. 3A, which is not repeated herein.

The method in embodiments of the disclosure may include at least one of steps S3201 to S3207. For example, the step S3202 may be performed as an independent embodiment; the step S3202, the step S3203, the step S3204 and the step S3205 may be performed as an independent embodiment; and the step S3202, the step S3203, the step S3204, the step S3205 and the step S3206 may be performed as an independent embodiment, which is not limited herein.

In some embodiments, the steps S3201 to S3207 may be exchanged in order or performed simultaneously. For example, the step S3203 and the step S3204 may be exchanged in order or performed simultaneously.

In some embodiments, the steps S3201 to S3207 are all optional steps. For example, the step S3201, the step S3204, the step S3206 and the step S3207 are optional steps, and one or more of the steps may be omitted or substituted in different embodiments.

In embodiments of the disclosure, the step S3202 may be combined with the step S3101 in FIG. 3A.

FIG. 3C is a flowchart illustrating a method for model performance monitoring according to an embodiment of the disclosure. As shown in FIG. 3C, embodiments of the disclosure relates to a method for model performance monitoring. The method is performed by a terminal. The method may include the following steps S3301 to S3304.

At step S3301, first information is obtained.

For optional implementations of step S3301, reference may be made to the optional implementations of step S2102 in FIG. 2A and step S3102 in FIG. 3A, and other related parts in the embodiments involved in FIG. 2A and FIG. 3A, which is not repeated herein.

At step S3302, measurement data is obtained by performing measurement on beams in a fourth reference signal resource set based on the first information.

For optional implementations of step S3302, reference may be made to the optional implementations of step S2103 in FIG. 2A and step S3103 in FIG. 3A, and other related parts in the embodiments involved in FIG. 2A and FIG. 3A, which is not repeated herein.

At step S3303, measurement data is obtained by performing measurement on beams in a third reference signal resource set based on the first information.

For optional implementations of step S3303, reference may be made to the optional implementations of step S2104 in FIG. 2A and step S3104 in FIG. 3A, and other related parts in the embodiments involved in FIG. 2A and FIG. 3A, which is not repeated herein.

At step S3304, a performance monitoring report is sent.

For optional implementations of step S3304, reference may be made to the optional implementations of step S2106 in FIG. 2A and step S3106 in FIG. 3A, and other related parts in the embodiments involved in FIG. 2A and FIG. 3A, which is not repeated herein.

In some embodiments, the above steps are all optional steps.

In some embodiments, embodiments shown in FIG. 3C may also be combined with the step S3101 in embodiments shown in FIG. 3A as a new embodiment.

In some embodiments, embodiments shown in FIG. 3C may also be combined with the step S3105 in embodiments shown in FIG. 3A as a new embodiment.

In some embodiments, embodiments shown in FIG. 3C may also be combined with the step S3107 and the step S3108 in embodiments shown in FIG. 3A as a new embodiment.

FIG. 3D is a flowchart illustrating a method for model performance monitoring according to an embodiment of the disclosure. As shown in FIG. 3D, embodiments of the disclosure relates to a method for model performance monitoring. The method is performed by a terminal. The method may include the following step S3401.

At step S3401, first information is obtained.

For optional implementations of step S3401, reference may be made to the optional implementations of step S2102 in FIG. 2A and step S3102 in FIG. 3A, and other related parts in the embodiments involved in FIG. 2A and FIG. 3A, which is not repeated herein.

In some embodiments, the method further includes:
sending second information to the network device, in which the second information is configured to request performance monitoring of the first model.

In some embodiments, the second information includes at least one of:
an SR for requesting model performance monitoring;
a Msg 1 or a Msg A of an RA for requesting model performance monitoring;
a model ID of the first model;
a functionality ID corresponding to the first model; or
first configuration information, in which the first configuration information includes a resource configuration for performing performance monitoring of the first model.

In some embodiments, the first model is a model for performing beam prediction, and the first configuration information includes at least one of:
a first reference signal resource set, in which the first reference signal resource set includes beams to be measured;
a second reference signal resource set, in which the second reference signal resource set includes beams to be predicted;
a relationship between the first reference signal resource set and the second reference signal resource set;
a first performance monitoring duration, in which the first performance monitoring duration is a duration for performance monitoring of the first model requested by a terminal; or
a first sample number, in which the first sample number is a number of samples requested by the terminal for performing performance monitoring of the first model, and the number of samples is a number of times the network device sends a reference signal resource.

In some embodiments, the first model is a model for performing spatial domain beam prediction, and the relationship between the first reference signal resource set and the second reference signal resource set includes at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

In some embodiments, the first model is a model for performing time domain beam prediction, and the relationship between the first reference signal resource set and the second reference signal resource set includes at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, in which the first time is a time at which measurement is performed on the first reference signal resource set, and the second time is a time at which prediction or measurement is performed on the second reference signal resource set.

In some embodiments, the method further includes:
receiving third information sent by the network device, in which the third information is configured to request performance monitoring of a second model; and
sending fourth information to the network device based on the third information, in which the fourth information indicates an agreement to the request of the third information.

In some embodiments, the first information includes at least one of:
a model ID of a second model;
a functionality ID corresponding to the second model;
a third reference signal resource set, in which the third reference signal resource set includes beams to be measured;
a fourth reference signal resource set, in which the fourth reference signal resource set includes beams to be predicted;
a relationship between the third reference signal resource set and the fourth reference signal resource set;
a relationship between a third time and a fourth time, in which the third time is a time at which measurement is performed on the third reference signal resource set, and the fourth time is a time at which prediction or measurement is performed on the fourth reference signal resource set;
a second performance monitoring duration, in which the second performance monitoring duration is a duration for performance monitoring of the second model requested by the network device;
a second sample number, in which the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples included in one performance monitoring report;
a model management threshold, in which the model management threshold is configured to determine whether to activate the second model;
a PUCCH resource / a PUSCH resource corresponding to the performance monitoring report;
a first event, in which the first event includes a performance metric configured to determine that a performance value of the second model satisfies a preset performance condition;
a first threshold corresponding to the first event, in which the first threshold is configured to determine whether to trigger the first event; or
a first offset value corresponding to the first event, in which the first offset value is configured to determine whether to trigger the first event.

In some embodiments, the method further includes:
sending the performance monitoring report to the network device, in which the performance monitoring report includes at least one of:
measurement data;
prediction data;
the performance value of the second model, in which the performance value is determined based on the measurement data and the prediction data;
the first event, in which the first event is triggered based on a comparison result between the performance value of the second model and the first threshold or the first offset value; or
first operation information, in which the first operation information indicates a management operation on the second model, and the management operation includes whether to activate the second model.

In some embodiments, the method further includes:
obtaining the measurement data by performing measurement on the beams in the fourth reference signal resource set based on the first information.

In some embodiments, the measurement data includes at least one of:
L1-RSRPs of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a BLER of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

In some embodiments, the method further includes:
obtaining the measurement data by performing measurement on the beams in the third reference signal resource set based on the first information.

In some embodiments, the measurement data includes at least one of:
L1-RSRPs of best K beams measured in the third reference signal resource set; or
an L1-RSRP of each beam measured in the third reference signal resource set.

In some embodiments, the method further includes:
obtaining the prediction data based on the measurement data corresponding to the third reference signal resource set.

In some embodiments, the prediction data includes at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of the radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

In some embodiments, the performance metric includes at least one of:
prediction accuracy of a beam or a beam pair;
prediction accuracy of a beam or a beam pair for which an L1-RSRP difference is within a first threshold, in which the L1-RSRP difference is a difference between a measured L1-RSRP of a best predicted beam or a best predicted beam pair and a measured L1-RSRP of a measured best beam or a measured best beam pair;
an L1-RSRP difference degree, in which the L1-RSRP difference degree is a difference degree between the measured L1-RSRP of the best predicted beam or the best predicted beam pair and the measured L1-RSRP of the measured best beam or the measured best beam pair; and the L1-RSRP difference degree includes at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, in which the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree includes at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
a difference degree for BLER prediction;
prediction accuracy for beam failure time; or
prediction accuracy for a new beam.
In some embodiments, the performance value includes at least one of:
accuracy of the predicted beam or the predicted beam pair;
prediction accuracy of the beam or the beam pair for which the L1-RSRP difference is within the first threshold;
a first L1-RSRP difference degree, in which the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, in which the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
the prediction accuracy for beam failure probability;
the difference degree for radio link quality prediction, in which the difference degree for radio link quality prediction is a difference degree between predicted radio link quality and measured radio link quality;
the difference degree for BLER prediction, in which the difference degree for BLER prediction is a difference degree between a predicted BLER and a measured BLER;
the prediction accuracy for beam failure time; or
the prediction accuracy for the new beam.

In some embodiments, the first threshold includes at least one of:
a first accuracy threshold;
a second accuracy threshold;
a first difference degree threshold;
a second difference degree threshold;
a first throughput threshold;
a first overhead threshold;
a second overhead threshold;
a first delay threshold;
a third accuracy threshold;
a third difference degree threshold;
a fourth difference degree threshold;
a fourth accuracy threshold; or
a fifth accuracy threshold.

In some embodiments, the first event includes at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

In some embodiments, the second model is a model in an inactive state, and the method further includes:
receiving an activation command sent by the network device; and
activating the second model based on the activation command.

In some embodiments, the first model and/or the second model is deployed on the terminal, or the first model and/or the second model is deployed on the network device.

In some embodiments, the method further includes:
sending capability indication information to the network device, in which the capability indication information indicates at least one of:
whether the terminal supports the first model and/or the second model;
whether the terminal supports performance monitoring of an inactive model deployed on the terminal; or
whether the terminal supports performance monitoring of the inactive model deployed on the network device.

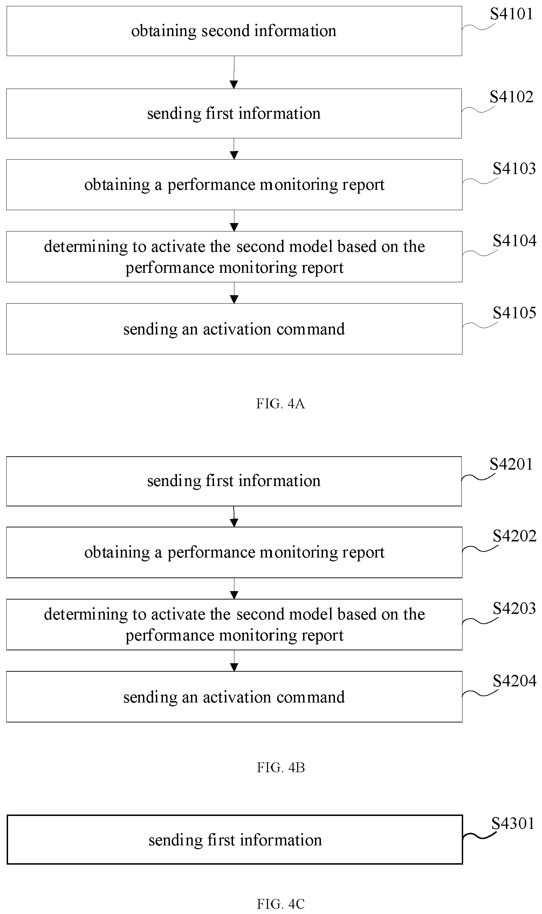

FIG. 4A is a flowchart illustrating a method for model performance monitoring according to an embodiment of the disclosure. As shown in FIG. 4A, embodiments of the disclosure relates to a method for model performance monitoring. The method is performed by a network device. The method may include the following steps S4101 to S4105.

At step S4101, second information is obtained.

For optional implementations of step S4101, reference may be made to the optional implementations of step S2101 in FIG. 2A and other related parts in the embodiments involved in FIG. 2A, which is not repeated herein.

In some embodiments, the network device may receive the second information sent by a terminal, but is not limited herein; the network device may also receive second information sent by another entity.

In some embodiments, the network device may obtain the second information specified by a protocol.

In some embodiments, the terminal may obtain the second information by performing processing.

In some embodiments, the second information may be configured to request performance monitoring of a first model.

At step S4102, first information is sent.

For optional implementations of step S4102, reference may be made to the optional implementations of step S2102 in FIG. 2A and other related parts in the embodiments involved in FIG. 2A, which is not repeated herein.

In some embodiments, the network device may send the first information to the terminal, but is not limited herein; the network device may also send the first information to another entity.

In some embodiments, the first information may be configured to determine performance monitoring of a second model.

In some embodiments, the second model may be the same as the first model, or may be different from the first model.

At step S4103, a performance monitoring report is obtained.

For optional implementations of step S4103, reference may be made to the optional implementations of step S2106 in FIG. 2A and other related parts in the embodiments involved in FIG. 2A, which is not repeated herein.

In some embodiments, if the first model is deployed on the network device, the terminal may not send information other than measurement data to the network device.

At step S4104, it is determined to activate the second model based on the performance monitoring report.

For optional implementations of step S4104, reference may be made to the optional implementations of step S2107 in FIG. 2A and other related parts in the embodiments involved in FIG. 2A, which is not repeated herein.

At step S4105, an activation command is sent.

For optional implementations of step S4105, reference may be made to the optional implementations of step S2108 in FIG. 2A and other related parts in the embodiments involved in FIG. 2A, which is not repeated herein.

In some embodiments, the activation command may be configured to activate the second model.

In some embodiments, the network device may send the activation command to the terminal, but is not limited herein; the network device may also send the activation command to another entity.

In some embodiments, the step S4105 may be omitted, or the above function may be absent or default.

The method in embodiments of the disclosure may include at least one of steps S4101 to S4105. For example, the step S4102 may be performed as an independent embodiment; the step S4101 and the step S4102 may be performed as an independent embodiment; the step S4102 and the step S4103 may be performed as an independent embodiment; and the step S4102, the step S4103 and the step S4104 may be performed as an independent embodiment, which is not limited herein.

In some embodiments, the steps S4101 to S4105 may be optional steps. For example, the steps S411, S4103 and S4105 are optional. In different embodiments, one or more of these steps may be omitted or replaced.

In some embodiments, reference may be made to other optional implementations described before or after the embodiments corresponding to FIG. 4A.

FIG. 4B is a flowchart illustrating a method for model performance monitoring according to an embodiment of the disclosure. As shown in FIG. 4B, embodiments of the disclosure relates to a method for model performance monitoring. The method is performed by a network device. The method may include the following steps S4201 to S4204.

At step S4201, first information is sent.

For optional implementations of step S4201, reference may be made to the optional implementations of step S2102 in FIG. 2A and step S4102 in FIG. 4A, and other related parts in the embodiments involved in FIG. 2A and FIG. 4A, which is not repeated herein.

At step S4202, a performance monitoring report is obtained.

For optional implementations of step S4202, reference may be made to the optional implementations of step S2106 in FIG. 2A and step S4103 in FIG. 4A, and other related parts in the embodiments involved in FIG. 2A and FIG. 4A, which is not repeated herein.

At step S4203, it is determined to activate the second model based on the performance monitoring report.

For optional implementations of step S4203, reference may be made to the optional implementations of step S2107 in FIG. 2A and step S4104 in FIG. 4A, and other related parts in the embodiments involved in FIG. 2A and FIG. 4A, which is not repeated herein.

At step S4204, an activation command is sent.

For optional implementations of step S4204, reference may be made to the optional implementations of step S2107 in FIG. 2A and step S4105 in FIG. 4A, and other related parts in the embodiments involved in FIG. 2A and FIG. 4A, which is not repeated herein.

In some embodiments, the above steps are all optional steps.

In some embodiments, the embodiment shown in FIG. 4B may also be combined with the step S4101 in the embodiment shown in FIG. 4A as a new embodiment.

FIG. 4C is a flowchart illustrating a method for model performance monitoring according to an embodiment of the disclosure. As shown in FIG. 4C, embodiments of the disclosure relates to a method for model performance monitoring. The method is performed by a network device. The method may include the following step S4301.

At step S4301, first information is sent.

For optional implementations of step S4301, reference may be made to the optional implementations of step S2102 in FIG. 2A and step S4102 in FIG. 4A, and other related parts in the embodiments involved in FIG. 2A and FIG. 4A, which is not repeated herein.

In some embodiments, the above steps are all optional steps.

In some embodiments, the embodiment shown in FIG. 4C may also be combined with at least one of the step S4101, the step S4103, and the step S4104 in the embodiment shown in FIG. 4A as a new embodiment.

In some embodiments, the method further includes:
receiving second information sent by the terminal, in which the second information is configured to request performance monitoring of the first model.

In some embodiments, the second information includes at least one of:
an SR for requesting model performance monitoring;
a first Msg 1 or a Msg A of an RA for requesting model performance monitoring;
a model ID of the first model;
a functionality ID corresponding to the first model; or
first configuration information, in which the first configuration information includes a resource configuration for performing performance monitoring of the first model.

In some embodiments, the first model is a model for performing beam prediction, and the first configuration information includes at least one of:
a first reference signal resource set, in which the first reference signal resource set includes beams to be measured;
a second reference signal resource set, in which the second reference signal resource set includes beams to be predicted;
a relationship between the first reference signal resource set and the second reference signal resource set;
a first performance monitoring duration, in which the first performance monitoring duration is a duration for performance monitoring of the first model requested by a terminal; or
a first sample number, in which the first sample number is a number of samples requested by the terminal for performing performance monitoring of the first model, and the number of samples is a number of times the network device sends a reference signal resource.

In some embodiments, the first model is a model for performing spatial domain beam prediction, and the relationship between the first reference signal resource set and the second reference signal resource set includes at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

In some embodiments, the first model is a model for performing time domain beam prediction, and the relationship between the first reference signal resource set and the second reference signal resource set includes at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, in which the first time is a time at which measurement is performed on the first reference signal resource set, and the second time is a time at which prediction or measurement is performed on the second reference signal resource set.

In some embodiments, the method further includes:
sending third information to the terminal, in which the third information is configured to request performance monitoring of a second model; and
receiving fourth information sent by the terminal based on the third information, in which the fourth information indicates an agreement to the request of the third information.

In some embodiments, the first information includes at least one of:
a model ID of a second model;
a functionality ID corresponding to the second model;
a third reference signal resource set, in which the third reference signal resource set includes beams to be measured;
a fourth reference signal resource set, in which the fourth reference signal resource set includes beams to be predicted;
a relationship between the third reference signal resource set and the fourth reference signal resource set;
a relationship between a third time and a fourth time, in which the third time is a time at which measurement is performed on the third reference signal resource set, and the fourth time is a time at which prediction or measurement is performed on the fourth reference signal resource set;
a second performance monitoring duration, in which the second performance monitoring duration is a duration for performance monitoring of the second model requested by the network device;
a second sample number, in which the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples included in one performance monitoring report;
a model management threshold, in which the model management threshold is configured to determine whether to activate the second model;
a PUCCH resource/ a PUSCH resource corresponding to the performance monitoring report;
a first event, in which the first event includes a performance metric configured to determine that a performance value of the second model satisfies a preset performance condition;
a first threshold corresponding to the first event, in which the first threshold is configured to determine whether to trigger the first event; or
a first offset value corresponding to the first event, in which the first offset value is configured to determine whether to trigger the first event.

In some embodiments, the method further includes:
receiving the performance monitoring report sent by the terminal, in which the performance monitoring report includes at least one of:
measurement data;
prediction data;
the performance value of the second model, in which the performance value is determined based on the measurement data and the prediction data;
the first event, in which the first event is triggered based on a comparison result between the performance value of the second model and the first threshold or the first offset value; or
first operation information, in which the first operation information indicates a management operation on the second model, and the management operation includes whether to activate the second model.

In some embodiments, the measurement data is obtained by the terminal by performing measurement on the beams in the fourth reference signal resource set based on the first information; and the measurement data includes at least one of:
L1-RSRPs of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a BLER of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

In some embodiments, the measurement data is obtained by the terminal by performing measurement on the beams in the third reference signal resource set based on the first information; the measurement data includes at least one of:
L1-RSRPs of best K beams measured in the third reference signal resource set; or
an L1-RSRP of each beam measured in the third reference signal resource set.

In some embodiments, the prediction data is obtained by the terminal based on the measurement data corresponding to the third reference signal resource set; and the prediction data includes at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

In some embodiments, the performance metric includes at least one of:
prediction accuracy of a beam or a beam pair;
prediction accuracy of a beam or a beam pair for which an L1-RSRP difference is within a first threshold, in which the L1-RSRP difference is a difference between a measured L1-RSRP of a best predicted beam or a best predicted beam pair and a measured L1-RSRP of a measured best beam or a measured best beam pair;
an L1-RSRP difference degree, in which the L1-RSRP difference degree is a difference degree between the measured L1-RSRP of the best predicted beam or the best predicted beam pair and the measured L1-RSRP of the measured best beam or the measured best beam pair; and the L1-RSRP difference degree includes at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, in which the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree includes at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
a difference degree for BLER prediction;
prediction accuracy for beam failure time; or
prediction accuracy for a new beam.

In some embodiments, the performance value includes at least one of:
accuracy of the predicted beam or the predicted beam pair;
prediction accuracy of the beam or the beam pair for which the L1-RSRP difference is within the first threshold;
a first L1-RSRP difference degree, in which the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, in which the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
the prediction accuracy for beam failure probability;
the difference degree for radio link quality prediction, in which the difference degree for radio link quality prediction is a difference degree between predicted radio link quality and measured radio link quality;
the difference degree for BLER prediction, in which the difference degree for BLER prediction is a difference degree between a predicted BLER and a measured BLER;
the prediction accuracy for beam failure time; or
the prediction accuracy for the new beam.

In some embodiments, the first threshold includes at least one of:
a first accuracy threshold;
a second accuracy threshold;
a first difference degree threshold;
a second difference degree threshold;
a first throughput threshold;
a first overhead threshold;
a second overhead threshold;
a first delay threshold;
a third accuracy threshold;
a third difference degree threshold;
a fourth difference degree threshold;
a fourth accuracy threshold; or
a fifth accuracy threshold.

In some embodiments, the first event includes at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

In some embodiments, the method further includes:
determining to activate the second model based on the performance monitoring report; and
activating the second model, or sending an activation command to the terminal, in which the activation command is used by the terminal to activate the second model.

In some embodiments, the first model and/or the second model is deployed on the terminal, or the first model and/or the second model is deployed on the network device.

In some embodiments, the method further includes:
receiving capability indication information sent by the terminal, in which the capability indication information indicates at least one of:
whether the terminal supports the first model and/or the second model;
whether the terminal supports performance monitoring of an inactive model deployed on the terminal; or
whether the terminal supports performance monitoring of the inactive model deployed on the network device.

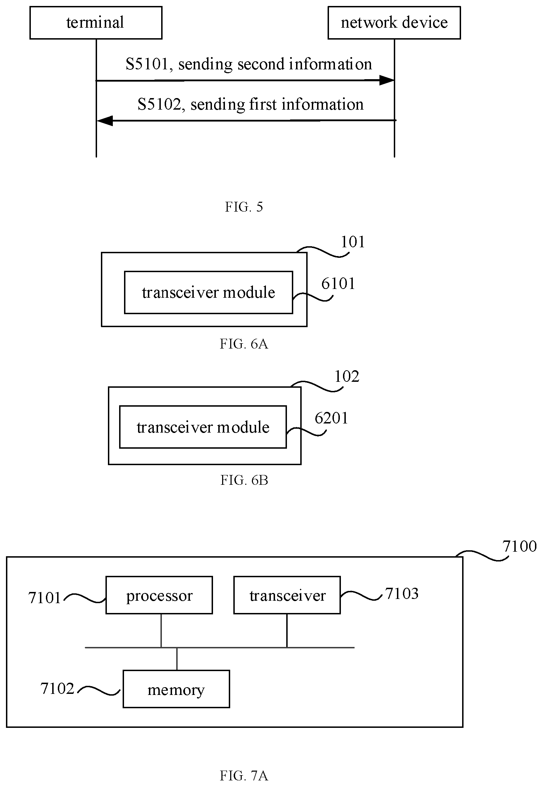

FIG. 5 is an interaction diagram illustrating a method for model performance monitoring according to an embodiment of the disclosure. As shown in FIG. 5, embodiments of the disclosure relates to a method for model performance monitoring. The method is performed by a communication system. The method may include the following steps S5101 to S5102.

At step S5101, a terminal sends second information to a network device.

The second information is configured to request performance monitoring of a first model.

For optional implementations of step S5101, reference may be made to the optional implementations of step S2101 in FIG. 2A and step S4101 in FIG. 4A, and other related parts in the embodiments involved in FIG. 2A and FIG. 4A, which is not repeated herein.

At step S5102, the network device sends first information to the terminal.

The first information is configured to determine performance monitoring of the first model.

For optional implementations of step S5102, reference may be made to the optional implementations of step S2102 in FIG. 2A, step S3102 in FIG. 3A, step S3201 in FIG. 3B, step S3301 in FIG. 3C, step S3401 in FIG. 3D, step S4102 in FIG. 4A, step S4201 in FIG. 4B, and step S4301 in FIG. 4C, and other related parts in the embodiments involved in FIG. 2A, FIG. 3A, FIG. 3B, FIG. 3C, FIG. 3D, FIG. 4A, FIG. 4B, and FIG. 4C, which is not repeated herein.

In some embodiments, the above method may include the methods described in embodiments of the communication system, the terminal, the network device, etc., which is not repeated herein.

The above embodiments are described below in three specific manners.

In the manner 1, a first model (an inactive AI model) may be deployed on a terminal, and the terminal initiates a request to perform performance monitoring of the first model.

In some embodiments, the terminal may initiate the request based on an SR or an RA, so as to request performance monitoring of the inactive AI model.

The SR may be an SR dedicated to requesting model performance monitoring, or a multiplexed existing initial SR for when there is uplink data to be transmitted, or an SR dedicated to beam failure recovery, or an SR for LBT. The RA may be a contention free RA, i.e., a dedicated preamble is configured. As long as Msg 1 or Msg A (including the preamble of Msg 1 and the PUSCH of Msg 3) is sent, the base station may know that the terminal is requesting model performance monitoring. The RA may also be contention based, but the network device needs to know, based on the Msg 3 or the Msg 3 in the Msg A, that model performance monitoring is requested.

In some embodiments, if the first model is an identified model, the request initiated by the terminal may include a model ID or a functionality ID.

In some embodiments, the request initiated by the terminal may further include a reference signal resource configuration.

It should be noted that if a reference signal resource configuration for performance monitoring corresponding to the model ID or the functionality ID is uniquely determined, the request initiated by the terminal may not include the reference signal resource configuration in the case that the terminal reports the model ID or the functionality ID.

In some embodiments, if the first model is a spatial domain beam prediction model, the reference signal resource configuration may include: a first reference signal resource set B, a second reference signal resource set A, and a mapping relationship between beams in the set B and the set A. The mapping relationship may include: the set B is a subset of the set A, and in this case, it is also necessary to indicate which reference signal resources in the set A are included in the set B; beams corresponding to the set B are wide beams, beams corresponding to the set A are narrow beams, and it is necessary to indicate which narrow beams in the set A each wide beam of the set B may cover.

In some embodiments, if the first model is a time domain beam prediction model, the reference signal resource configuration includes, in addition to the information included in the reference signal configuration resource corresponding to the spatial domain beam prediction model, a relationship between a historical measurement time and a future prediction time. For example, the future prediction time is between two adjacent measurement times, which is in a sliding window mode, i.e., input measurement times all correspond to measurement results of a long period, and what is predicted is predicted beam information for a short period between two long periods. It is also necessary to indicate the number of input measurement times, the time corresponding to each prediction time predicted, and the period of the measurement time. The relationship between the historical measurement time and the future prediction time may also be a measurement interruption mode, for example, the 1^{st} to 4^{th} periods are measurement times, the 5^{th} to 6^{th} periods are prediction times; then the 7^{th} to 10^{th} periods are measurement times, the 11^{th} to 12^{th} periods are prediction times. It is also necessary to indicate the number of input measurement times, the time corresponding to each prediction time predicted, and the period of the measurement time. Further, the mapping relationship between beams in the set B and the set A also includes the situation where the set B is the same as the set A.

In some embodiments, the request initiated by the terminal may further include a monitoring duration and a monitoring sample number. The monitoring duration is a time for model performance monitoring, i.e., informing the network device how long the reference signal resource needs to be sent. The monitoring sample number is a number of samples for model performance monitoring, i.e., informing the network device how many times the reference signal resource needs to be sent to meet the required number of samples.

In the manner 2, the first model (the inactive AI model) may be deployed on the terminal, and the network device initiates a request to perform performance monitoring of the first model.

In some embodiments, the network device may initiate a request based on at least one of RRC, MAC CE, or DCI.

In some embodiments, the request initiated by the network device may include at least one of:
a model ID or a functionality ID;
reference signal resource configuration information, in which the reference signal resource configuration information may include a reference signal resource ID and time domain configuration information, and the time domain configuration information may include a sending time, a number of sending times, a start sending time, and an end sending time, and the sending time may include: a period and an offset; or
performance monitoring reporting information.

It should be noted that, in the case that the first model is identified, the request initiated by the network device includes a model ID or a functionality ID.

In some embodiments, the performance monitoring reporting information may include at least one of:
1. periodic reporting or aperiodic reporting;
2. a number of samples after which the report is sent;
3. corresponding PUCCH/PUSCH resource information;
4. a performance metric for performance monitoring;
5. a threshold for determining management of the model or functionality, for example, if the metric is higher than the threshold, the model or functionality may be activated;
6. in a case that reporting is performed or it is determined to associate with the model or functionality based on an event, the event and a threshold or an offset value corresponding to the event need to be configured; or
7. data content for calculating the performance metric: the network device may configure the terminal to report data for calculating the metric, for example, including measurement beam information of the best beam in the set A actually measured by the terminal, and predicted beam information of the best beam in the set A output by the first model, and the network device calculates the metric based on the predicted measurement beam information and the predicted beam information; the measurement beam information and the predicted beam information respectively include at least one of:
   (1) IDs of best K beams;
   (2) L1-RSRPs corresponding to the IDs of the best K beams;
   (3) L1-RSRPs of all beams in set A;
   (4) a probability that radio link quality of each of the best K beams within a specified time is lower than Qout; a BLER corresponding to the radio link quality is obtained and in a case that the BLER is higher than Qout, it indicates beam failure; the radio link quality includes SNR and SINR; the probability value may be a hard probability, i.e., in a case that it is determined that the BLER is higher than Qout, the probability is 1, otherwise the probability is 0; the probability value may also be a soft probability, for example, in a case that it is determined that the BLER is higher than Qout and a difference by which it is higher than Qout is greater than a threshold, the probability is 1, otherwise the probability is 80%; in a case that it is determined that the BLER is lower than Qout and a difference by which it is lower than Qout is greater than a threshold, the probability is 0, otherwise the probability is 30%;
   (5) a value of the radio link quality or a value of the BLER of each of the best K beams at a specified time, i.e., predicting the value of the radio link quality or the value of the BLER at a time point corresponding to the specified time; or
   (6) a lowest value of the radio link quality or a highest value of the BLER of each of the best K beams within a specified time, i.e., predicting the lowest value of the radio link quality or the highest value of the BLER before a time point corresponding to the specified time and after a current moment; in a case that the corresponding BLER is greater than Qout, it indicates that beam failure may occur between the time point and the current moment.

In some embodiments, the request initiated by the network device may be divided into two steps. The first step is to indicate a request for model performance monitoring, which may include a functionality ID or a model ID (if any) corresponding to the model. After the terminal receives the request for performance monitoring, the network device performs configuration of reference signal resource configuration information and reporting information, etc., in the second step. When the terminal receives the request for performance monitoring, the terminal may simultaneously inform an ID corresponding to the functionality or the model accepted for performance monitoring, or corresponding conditions (including information of set B and set A, and applicable environments, etc.).

In some embodiments, in a case that the request for performance monitoring is initiated by the terminal, the network device may also send corresponding configuration information, and the configuration information may be consistent with the configuration information provided when the network device initiates the request (in a case that there are two steps, it may be the same as that sent by the network device in the above second step). That is, after receiving the request or configuration information sent by the network device, the terminal performs measurement on the corresponding reference signal resource, obtains a report, and sends the report.

In some embodiments, the content of the report reported by the terminal includes at least one of:
data for calculating the performance metric;
a calculated performance metric;
an event ID triggering the report; or
a model management decision made by the terminal, for example, a functionality ID or a model ID suggested for activation.

In some embodiments, after the terminal reports, the terminal receives an activation signaling sent by the base station, in which the activation signaling indicates an activated functionality ID or an activated model ID.

The first model (first functionality) may be used for CSI compression, CSI prediction, or spatial domain beam prediction, or time domain beam prediction, or beam failure information prediction, or positioning. A beam refers to a beam, and beam measurement refers to measuring L1-RSRP and/or L1-SINR for reference signals including SSB, CSI-RS, and SRS; beam indication refers to an indication of a transmission configuration indicator (TCI) state, where the TCI state includes at least one QCL type of: Type A, Type B, Type C, or Type D, in which Type D is reception parameter information, commonly referred to as a beam. Type A, Type B, Type C include at least one of parameters related to Doppler shift, Doppler spread, average delay, and delay spread. For an uplink beam, it refers to spatial relation information or a spatial filter parameter or an uplink TCI state.

In some embodiments, the performance metric may include at least one of the following items 1 to 13.
1. Beam prediction accuracy: beam prediction accuracy of top 1/K beam (pair).
   The correct beam prediction means: an ID of a predicted strongest beam (pair) includes an ID of an actual strongest beam (pair), or the ID of the predicted strongest beam (pair) is included in IDs of actual strongest N beams (pairs). A downlink TX beam ID may be equivalent to a reference signal resource ID, for example, the downlink TX beam ID may be an SSB ID, a CSI-RS ID, or an SRS ID. A downlink RX beam ID is an Rx beam ID of the terminal. A beam pair ID is an ID corresponding to a combination of a downlink TX beam and a downlink RX beam. The strongest beam means the strongest L1-RSRP or L1-SINR, and an accuracy metric may be based on a plurality of derivations of the model to check the accuracy of output beam information, for example, the accuracy metric may be a ratio.
2. Beam prediction accuracy for which an L1-RSRP is within 1 dB: it is the accuracy when a difference between an actual L1-RSRP of a predicted best beam (pair) and an actual L1-RSRP of an actual best beam is within 1 dB, and the accuracy metric may be based on the plurality of derivations of the model to check the accuracy of output beam information, for example, the accuracy metric may be a ratio.
3. An L1-RSRP difference degree: it is a difference between an actual L1-RSRP of a predicted best beam (pair) and an actual L1-RSRP of an actual best beam, for example, an average value is X dB, or a value at the 5% of a cumulative distribution function is Y dB, or it may be a ratio of the L1-RSRP difference being lower than a threshold, or a ratio of being higher than a threshold.
4. A predicted L1-RSRP difference degree: it is a difference between an actual L1-RSRP of a predicted best beam (pair) and a predicted L1-RSRP of the best beam of the predicted best beam (pair), for example, an average value is X dB, or a value at the 5% of the cumulative distribution function is Y dB, or it may be a ratio of the predicted L1-RSRP difference being lower than a threshold, or a ratio of being higher than a threshold.
5. Average UE throughput, or UE throughput at the 5% of the cumulative distribution function: it is based on a predicted strongest beam (pair) and an actual strongest beam (pair), SINRs corresponding to the two beams (pairs) are obtained, a capacity is calculated based on Shannon capacity, and a difference in capacity is the metric.
6. Reference signal overhead: how many reference signal resources are needed for the model, in which main influencing factors include a size of the set B corresponding to a model input, and a number of historical measurement times during time domain prediction.
7. Uplink control information overhead: in a case that the model is deployed on the network device (i.e., NW-side model), measurement results of the set B all need to be reported to the network, i.e., signaling overhead for such reporting.
8. Prediction delay.
9. Prediction accuracy for beam failure probability: in a case that a hard probability is predicted, it is predicted that a beam will fail and the beam actually fails, then it indicates the prediction is accurate, otherwise it is inaccurate; in a case that a soft probability is predicted, a probability of predicting that the BLER is higher than Qout is greater than 50%, and the BLER is actually higher than Qout, then it indicates the prediction is accurate, otherwise it is inaccurate.
10. A difference degree for a value of radio link quality: in a case that a predicted value of radio link quality at a specified time is predicted, a measured value of radio link quality at the specified time is determined, and a difference between the predicted value and the measured value is the difference degree; in a case that a predicted lowest value of radio link quality within a specified time is predicted, a measured lowest value of radio link quality within the specified time is determined, and a difference between the predicted lowest value and the measured lowest value is the difference degree.
11. A difference degree for BLER: in a case that a predicted value of BLER at a specified time is predicted, a measured value of BLER at the specified time is determined, and a difference between the predicted value and the measured value is the difference degree; in a case that a predicted lowest value of BLER within the specified time is predicted, a measured lowest value of BLER within the specified time is determined, and a difference between the predicted lowest value and the measured lowest value is the difference degree.
12. A difference degree for beam failure time or prediction accuracy for beam failure time: in a case that it is predicted that beam failure will occur within a specified time, a difference between a predicted time of beam failure occurrence and a measured time of beam failure occurrence is the difference degree for beam failure time; or in a case that the difference between the predicted time of beam failure occurrence and the measured time of beam failure occurrence is below a threshold, the prediction is accurate, otherwise it is inaccurate.
13. Prediction accuracy for a new beam: in a case that it is predicted that beam failure will occur within a specified time on the new beam and it is measured that beam failure occurs on the new beam, and the predicted new beam includes the measured new beam, then the prediction is accurate, otherwise it is inaccurate.

In some embodiments, the event may include at least one of:
beam prediction accuracy being higher than a threshold;
an L1-RSRP difference being lower than a threshold;
UE throughput being higher than a threshold;
UCI signaling overhead being lower than a threshold; or
RS overhead being lower than a threshold.

It should be noted that the event may be a condition in which each metric may reflect that performance of an AI functionality or an AI model is good.

In the manner 3, the first model (the inactive AI model) may be deployed on the network device, and the network device initiates a request to perform performance monitoring of the first model.

In some embodiments, the request initiated by the network device may not include a functionality ID or a model ID of the first model. For other content in the request, reference may be made to the content in the request in the manner 2, which is not repeated herein.

In some embodiments, the request initiated by the network device may also include content to be reported by the terminal, and the content may include at least one of the following items 1 to 2.
1. Input of the NW-side model.
   (1) In a case that the first model is used for beam information prediction, the input includes beam (pair) IDs and L1-RSRPs of set B, or L1-RSRPs corresponding to beams (pairs) of set B. For time domain beam prediction, the input further includes measurement beam information at a plurality of historical measurement times.
   (2) In a case that the first model is used for beam failure information prediction, and the model for beam failure information prediction and the model for beam information prediction are the same model, the input may include a specified time; in a case that the model for beam failure information prediction and the model for beam information prediction are not the same model, or the first model is only used for predicting beam failure information, the input may include at least one of:
      at least one of L1-RSRPs/ L1-SINRs/beam (pair) IDs (a reference signal resource ID and/or an Rx beam ID) of actually measured or predicted best K beams;
      measured or predicted L1-RSRPs/L1-SINRs of all beams in set A;
      measured or predicted L1-RSRPs/L1-SINRs of a fixed plurality of beams in set A;
      at least one of measured or predicted L1-RSRPs/L1-SINRs/beam (pair) IDs (a reference signal resource ID and/or an Rx beam ID) of a randomly selected plurality of beams in set A; or
      a specified time.
2. Measurement beam information actually measured by the terminal: the measurement beam information is the same as that in the manner 2, which is not repeated herein.

In some embodiments, the network device may or may not inform the terminal whether to activate the first model (or first functionality).

In some embodiments, the terminal may report capability information: reporting a support for performance monitoring of the inactive AI model deployed on the terminal (or the network device). The reporting may be performed separately (i.e., only one type may be supported), or jointly (i.e., both types are supported).

In some embodiments of the disclosure, a communication system is provided. The communication system may include a network device, configured to implement the method for model performance monitoring performed by the network device according to any one of the above embodiments of the disclosure; and a terminal, configured to implement the method for model performance monitoring performed by the terminal according to any one of the above embodiments of the disclosure.

Embodiments of the disclosure also provide an apparatus for implementing any one of the above methods. For example, an apparatus is provided, including units or modules for performing the steps executed by the terminal in any one of the above methods. For example, another apparatus is provided, including units or modules for performing the steps executed by the first network device (e.g., an access network device, a core network node, a core network device, etc.) in any one of the above methods. For example, another apparatus is provided, including units or modules for performing the steps executed by the second network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 6A is a block diagram illustrating a terminal according to an embodiment of the disclosure. As shown in FIG. 6A, the terminal 101 may include a transceiver module 6101. In some embodiments, the transceiver module 6101 is configured to receive first information sent by a network device, in which the first information is configured to determine performance monitoring of a first model. Alternatively, the transceiver module 6101 may be configured to perform at least one of the communication steps (e.g., S2101, but is not limited herein) such as sending and/or receiving performed by the terminal 101 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

FIG. 6B is a block diagram illustrating a network device according to an embodiment of the disclosure. As shown in FIG. 6B, the network device 102 may include at least one of: a transceiver module 6201, or a processing module 6202. In some embodiments, the transceiver module 6201 is configured to send first information to a terminal, in which the first information is configured to determine performance monitoring of a first model. Alternatively, the transceiver module 6201 may be configured to perform at least one of the communication steps (e.g., S4101, but is not limited herein) such as sending and/or receiving performed by the network device 102 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

FIG. 7A is a block diagram illustrating a communication device 7100 according to an embodiment of the disclosure. The communication device 7100 may be a network device (such as an access network device, a core network device, etc.), or a terminal (such as a UE, etc.), or a chip, a chip system, a processor, etc. that supports a first device to implement any one of the methods, or a chip, a chip system, a processor, etc. that supports the terminal to implement any one of the methods. The communication device 7100 may be configured to implement the method in the above method embodiments. For details, reference may be made to the description in the above method embodiments.

As shown in FIG. 7A, the communication device 7100 may include one or more processors 7101. The processor 7101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, an IoT device, an IoT device chip, a DU or a CU, etc.), execute programs, and process program data. The communication device 8100 is configured to execute any one of the above methods.

Optionally, the communication device 7100 further includes one or more memories 7102 for storing instructions. Optionally, all or some of the memories 7102 may also be located outside the communication device 7100.

In some embodiments, the communication device 7100 further includes one or more transceivers 7103. When the communication device 7100 includes one or more transceivers 7103, the transceiver 7103 performs at least one of the communication steps (e.g., S2101, S4101, but is not limited herein) such as sending and/or receiving in the above method, and the processor 7101 performs at least one of other steps (e.g., S2103, but is not limited herein).

In some embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In some embodiments, the communication device 7100 further includes one or more interface circuits. Optionally, the interface circuit is connected to the memory 7102. The interface circuit may be configured to receive signals from the memory 7102 or other devices, and may be configured to send signals to the memory 7102 or other devices. For example, the interface circuit may read instructions stored in the memory 7102 and send the instructions to the processor 7101.

The communication device 7100 in the above embodiments may be a first device or an IoT device, but a scope of the communication device 7100 in the disclosure is not limited to this, and a structure of the communication device 7100 may not be limited by FIG. 7A. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, an IoT device, an intelligent IoT device, a cellular phone, a wireless device, a handheld phone, a mobile unit, a vehicle-mounted device, a network device, a cloud device, an artificial intelligence device, etc.; 6) others.

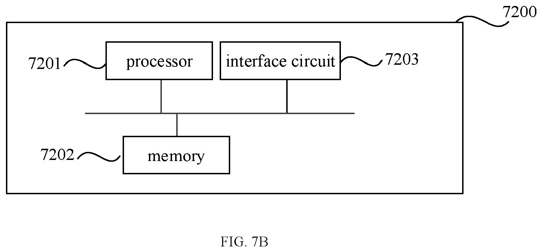

FIG. 7B is a block diagram illustrating a chip 7200 according to an embodiment of the disclosure. For a case where the communication device 7100 may be a chip or a chip system, reference may be made to the block diagram of the chip 7200 shown in FIG. 7B, but not limited to this.

The chip 8200 includes one or more processors 7201. The chip 7200 is configured to execute any one of the above methods.

In some embodiments, the chip 7200 further includes one or more interface circuits 7203. The interface circuit 7203 is connected to a memory 7202. The interface circuit 7203 may be configured to receive signals from the memory 7202 or other devices, and may be configured to send signals to the memory 7202 or other devices. For example, the interface circuit 7203 may read the instructions stored in the memory 7203 and send the instructions to the processor 7201.

In some embodiments, the interface circuit 7203 performs at least one of the communication steps such as sending and/or receiving in the above method (e.g., S2101, S4101, but is not limited herein), and the processor 7201 performs at least one of other steps (e.g., S2103, but is not limited herein).

In some embodiments, terms such as interface circuit, interface, transceiver pin, transceiver, etc. may be used interchangeably.

In some embodiments, the chip 7200 further includes one or more memories 7202 for storing instructions. Optionally, all or some of the memories 7202 may be located outside the chip 7200.

The disclosure also provides a storage medium for storing instructions. When the instructions are running on the communication device 7100, the communication device 7100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 7100, the communication device 7100 is caused to implement any one of the above methods. Optionally, the above program product is a computer program product.

The disclosure also provides a computer program. When the computer program is running on a computer, the computer is caused to implement any one of the above methods.

## Claims

1. A method for model performance monitoring, comprising:
receiving first information sent by a network device, wherein the first information is configured to determine performance monitoring of a first model.

2. The method according to claim 1, further comprising:
sending second information to the network device, wherein the second information is configured to request performance monitoring of the first model.

3. The method according to claim 2, wherein the second information comprises at least one of:
a scheduling request (SR) for requesting model performance monitoring;
a first message (Msg 1) or a message A (Msg A) of a random access (RA) for requesting model performance monitoring;
a model identifier (ID) of the first model;
a functionality ID corresponding to the first model; or
first configuration information, wherein the first configuration information comprises a resource configuration for performing performance monitoring of the first model.

4. The method according to claim 3, wherein the first model is a model for performing beam prediction, and the first configuration information comprises at least one of:
a first reference signal resource set, wherein the first reference signal resource set comprises beams to be measured;
a second reference signal resource set, wherein the second reference signal resource set comprises beams to be predicted;
a relationship between the first reference signal resource set and the second reference signal resource set;
a first performance monitoring duration, wherein the first performance monitoring duration is a duration for performance monitoring of the first model requested by a terminal; or
a first sample number, wherein the first sample number is a number of samples requested by the terminal for performing performance monitoring of the first model, and the number of samples is a number of times the network device sends a reference signal resource.

5. The method according to claim 4, wherein the first model is a model for performing spatial domain beam prediction, and the relationship between the first reference signal resource set and the second reference signal resource set comprises at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

6. The method according to claim 4, wherein the first model is a model for performing time domain beam prediction, and the relationship between the first reference signal resource set and the second reference signal resource set comprises at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, wherein the first time is a time at which measurement is performed on the first reference signal resource set, and the second time is a time at which prediction or measurement is performed on the second reference signal resource set.

7. The method according to any one of claims 1 to 6, further comprising:
receiving third information sent by the network device, wherein the third information is configured to request performance monitoring of a second model; and
sending fourth information to the network device based on the third information, wherein the fourth information indicates an agreement to the request of the third information.

8. The method according to any one of claims 1 to 7, wherein the first information comprises at least one of:
a model identifier (ID) of a second model;
a functionality ID corresponding to the second model;
a third reference signal resource set, wherein the third reference signal resource set comprises beams to be measured;
a fourth reference signal resource set, wherein the fourth reference signal resource set comprises beams to be predicted;
a relationship between the third reference signal resource set and the fourth reference signal resource set;
a relationship between a third time and a fourth time, wherein the third time is a time at which measurement is performed on the third reference signal resource set, and the fourth time is a time at which prediction or measurement is performed on the fourth reference signal resource set;
a second performance monitoring duration, wherein the second performance monitoring duration is a duration for performance monitoring of the second model requested by the network device;
a second sample number, wherein the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples comprised in one performance monitoring report;
a model management threshold, wherein the model management threshold is configured to determine whether to activate the second model;
a physical uplink control channel (PUCCH) resource/ a physical uplink shared channel (PUSCH) resource corresponding to the performance monitoring report;
a first event, wherein the first event comprises a performance metric configured to determine that a performance value of the second model satisfies a preset performance condition;
a first threshold corresponding to the first event, wherein the first threshold is configured to determine whether to trigger the first event; or
a first offset value corresponding to the first event, wherein the first offset value is configured to determine whether to trigger the first event.

9. The method according to claim 8, comprising:
sending the performance monitoring report to the network device, wherein the performance monitoring report comprises at least one of:
measurement data;
prediction data;
the performance value of the second model, wherein the performance value is determined based on the measurement data and the prediction data;
the first event, wherein the first event is triggered based on a comparison result between the performance value of the second model and the first threshold or the first offset value; or
first operation information, wherein the first operation information indicates a management operation on the second model, and the management operation comprises whether to activate the second model.

10. The method according to claim 9, comprising:
obtaining the measurement data by performing measurement on the beams in the fourth reference signal resource set based on the first information.

11. The method according to claim 9 or 10, wherein the measurement data comprises at least one of:
layer 1-reference signal receiving powers (L1-RSRPs) of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a block error rate (BLER) of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

12. The method according to claim 9, comprising:
obtaining the measurement data by performing measurement on the beams in the third reference signal resource set based on the first information.

13. The method according to claim 9 or 12, wherein the measurement data comprises at least one of:
layer 1-reference signal receiving powers (L1-RSRPs) of best K beams measured in the third reference signal resource set; or
an L1-RSRP of each beam measured in the third reference signal resource set.

14. The method according to claim 12 or 13, comprising:
obtaining the prediction data based on the measurement data corresponding to the third reference signal resource set.

15. The method according to any one of claims 9 to 14, wherein the prediction data comprises at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of the radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

16. The method according to any one of claims 9 to 15, wherein the performance metric comprises at least one of:
prediction accuracy of a beam or a beam pair;
prediction accuracy of a beam or a beam pair for which an L1-RSRP difference is within a first threshold, wherein the L1-RSRP difference is a difference between a measured L1-RSRP of a best predicted beam or a best predicted beam pair and a measured L1-RSRP of a measured best beam or a measured best beam pair;
an L1-RSRP difference degree, wherein the L1-RSRP difference degree is a difference degree between the measured L1-RSRP of the best predicted beam or the best predicted beam pair and the measured L1-RSRP of the measured best beam or the measured best beam pair; and the L1-RSRP difference degree comprises at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, wherein the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree comprises at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
a difference degree for BLER prediction;
prediction accuracy for beam failure time; or
prediction accuracy for a new beam.

17. The method according to claim 16, wherein the performance value comprises at least one of:
accuracy of the predicted beam or the predicted beam pair;
prediction accuracy of the beam or the beam pair for which the L1-RSRP difference is within the first threshold;
a first L1-RSRP difference degree, wherein the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, wherein the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
the prediction accuracy for beam failure probability;
the difference degree for radio link quality prediction, wherein the difference degree for radio link quality prediction is a difference degree between predicted radio link quality and measured radio link quality;
the difference degree for BLER prediction, wherein the difference degree for BLER prediction is a difference degree between a predicted BLER and a measured BLER;
the prediction accuracy for beam failure time; or
the prediction accuracy for the new beam.

18. The method according to claim 16 or 17, wherein the first threshold comprises at least one of:
a first accuracy threshold;
a second accuracy threshold;
a first difference degree threshold;
a second difference degree threshold;
a first throughput threshold;
a first overhead threshold;
a second overhead threshold;
a first delay threshold;
a third accuracy threshold;
a third difference degree threshold;
a fourth difference degree threshold;
a fourth accuracy threshold; or
a fifth accuracy threshold.

19. The method according to claim 18, wherein the first event comprises at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

20. The method according to any one of claims 8 to 19, wherein the second model is a model in an inactive state, and the method further comprises:
receiving an activation command sent by the network device; and
activating the second model based on the activation command.

21. The method according to any one of claims 8 to 20, wherein
the first model and/or the second model is deployed on the terminal, or the first model and/or the second model is deployed on the network device.

22. The method according to any one of claims 8 to 21, further comprising:
sending capability indication information to the network device, wherein the capability indication information indicates at least one of:
whether the terminal supports the first model and/or the second model;
whether the terminal supports performance monitoring of an inactive model deployed on the terminal; or
whether the terminal supports performance monitoring of the inactive model deployed on the network device.

23. A method for model performance monitoring, comprising:
sending first information to a terminal, wherein the first information is configured to determine performance monitoring of a first model.

24. The method according to claim 23, further comprising:
receiving second information sent by the terminal, wherein the second information is configured to request performance monitoring of the first model.

25. The method according to claim 24, wherein the second information comprises at least one of:
a scheduling request (SR) for requesting model performance monitoring;
a first message (Msg 1) or a message A (Msg A) of a random access (RA) for requesting model performance monitoring;
a model identifier (ID) of the first model;
a functionality ID corresponding to the first model; or
first configuration information, wherein the first configuration information comprises a resource configuration for performing performance monitoring of the first model.

26. The method according to claim 25, wherein the first model is a model for performing beam prediction, and the first configuration information comprises at least one of:
a first reference signal resource set, wherein the first reference signal resource set comprises beams to be measured;
a second reference signal resource set, wherein the second reference signal resource set comprises beams to be predicted;
a relationship between the first reference signal resource set and the second reference signal resource set;
a first performance monitoring duration, wherein the first performance monitoring duration is a duration for performance monitoring of the first model requested by a terminal; or
a first sample number, wherein the first sample number is a number of samples requested by the terminal for performing performance monitoring of the first model, and the number of samples is a number of times the network device sends a reference signal resource.

27. The method according to claim 26, wherein the first model is a model for performing spatial domain beam prediction, and the relationship between the first reference signal resource set and the second reference signal resource set comprises at least one of:
the first reference signal resource set being a subset of the second reference signal resource set; or
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set.

28. The method according to claim 26, wherein the first model is a model for performing time domain beam prediction, and the relationship between the first reference signal resource set and the second reference signal resource set comprises at least one of:
the first reference signal resource set being a subset of the second reference signal resource set;
the first reference signal resource set being the same as the second reference signal resource set;
beams corresponding to the first reference signal resource set being wide beams, beams corresponding to the second reference signal resource set being narrow beams, and a beam coverage corresponding to the first reference signal resource set being the same as a beam coverage corresponding to the second reference signal resource set; or
a relationship between a first time and a second time, wherein the first time is a time at which measurement is performed on the first reference signal resource set, and the second time is a time at which prediction or measurement is performed on the second reference signal resource set.

29. The method according to any one of claims 23 to 28, further comprising:
sending third information to the terminal, wherein the third information is configured to request performance monitoring of a second model; and
receiving fourth information sent by the terminal based on the third information, wherein the fourth information indicates an agreement to the request of the third information.

30. The method according to any one of claims 23 to 29, wherein the first information comprises at least one of:
a model identifier (ID) of a second model;
a functionality ID corresponding to the second model;
a third reference signal resource set, wherein the third reference signal resource set comprises beams to be measured;
a fourth reference signal resource set, wherein the fourth reference signal resource set comprises beams to be predicted;
a relationship between the third reference signal resource set and the fourth reference signal resource set;
a relationship between a third time and a fourth time, wherein the third time is a time at which measurement is performed on the third reference signal resource set, and the fourth time is a time at which prediction or measurement is performed on the fourth reference signal resource set;
a second performance monitoring duration, wherein the second performance monitoring duration is a duration for performance monitoring of the second model requested by the network device;
a second sample number, wherein the second sample number is a number of samples requested by the network device for performing performance monitoring on the second model, and the number of samples is a number of times the network device sends a reference signal resource;
a performance metric corresponding to the performance monitoring;
a reporting type of a performance monitoring report;
a number of samples comprised in one performance monitoring report;
a model management threshold, wherein the model management threshold is configured to determine whether to activate the second model;
a physical uplink control channel (PUCCH) resource/ a physical uplink shared channel (PUSCH) resource corresponding to the performance monitoring report;
a first event, wherein the first event comprises a performance metric configured to determine that a performance value of the second model satisfies a preset performance condition;
a first threshold corresponding to the first event, wherein the first threshold is configured to determine whether to trigger the first event; or
a first offset value corresponding to the first event, wherein the first offset value is configured to determine whether to trigger the first event.

31. The method according to claim 30, comprising:
receiving the performance monitoring report sent by the terminal, wherein the performance monitoring report comprises at least one of:
measurement data;
prediction data;
the performance value of the second model, wherein the performance value is determined based on the measurement data and the prediction data;
the first event, wherein the first event is triggered based on a comparison result between the performance value of the second model and the first threshold or the first offset value; or
first operation information, wherein the first operation information indicates a management operation on the second model, and the management operation comprises whether to activate the second model.

32. The method according to claim 31, wherein the measurement data is obtained by the terminal by performing measurement on the beams in the fourth reference signal resource set based on the first information; and the measurement data comprises at least one of:
layer 1-reference signal receiving powers (L1-RSRPs) of best K beams measured in the fourth reference signal resource set;
an L1-RSRP of each beam measured in the fourth reference signal resource set;
radio link quality of each of the best K beams measured within a fifth time;
a lowest value of the radio link quality of each of the best K beams measured within the fifth time;
a block error rate (BLER) of each of the best K beams measured within the fifth time;
a highest value of the BLER of each of the best K beams measured within the fifth time; or
a probability that the radio link quality of each of the best K beams measured within the fifth time is less than or equal to a preset link quality threshold.

33. The method according to claim 31, wherein the measurement data is obtained by the terminal by performing measurement on the beams in the third reference signal resource set based on the first information; the measurement data comprises at least one of:
layer 1-reference signal receiving powers (L1-RSRPs) of best K beams measured in the third reference signal resource set; or
an L1-RSRP of each beam measured in the third reference signal resource set.

34. The method according to any one of claims 31 or 33, wherein the prediction data is obtained by the terminal based on the measurement data corresponding to the third reference signal resource set; and the prediction data comprises at least one of:
L1-RSRPs of best K beams predicted in the fourth reference signal resource set;
an L1-RSRP of each beam predicted in the fourth reference signal resource set;
radio link quality of the best K beams predicted within a fifth time;
a lowest value of radio link quality of the best K beams predicted within the fifth time;
BLERs of the best K beams predicted within the fifth time;
a highest value of the BLERs of the best K beams predicted within the fifth time; or
a probability that the radio link quality of the best K beams predicted within the fifth time is less than or equal to a preset link quality threshold.

35. The method according to any one of claims 31 to 34, wherein the performance metric comprises at least one of:
prediction accuracy of a beam or a beam pair;
prediction accuracy of a beam or a beam pair for which an L1-RSRP difference is within a first threshold, wherein the L1-RSRP difference is a difference between a measured L1-RSRP of a best predicted beam or a best predicted beam pair and a measured L1-RSRP of a measured best beam or a measured best beam pair;
an L1-RSRP difference degree, wherein the L1-RSRP difference degree is a difference degree between the measured L1-RSRP of the best predicted beam or the best predicted beam pair and the measured L1-RSRP of the measured best beam or the measured best beam pair; and the L1-RSRP difference degree comprises at least one of: an average value of the L1-RSRP differences, a cumulative distribution function of the L1-RSRP differences, a ratio of the L1-RSRP difference being less than or equal to a second threshold, or a ratio of the L1-RSRP difference being greater than a third threshold;
a predicted L1-RSRP difference degree, wherein the predicted L1-RSRP difference degree is a difference degree between a predicted L1-RSRP of the best predicted beam or the best predicted beam pair and the measured L1-RSRP of the best predicted beam or the best predicted beam pair; and the predicted L1-RSRP difference degree comprises at least one of: an average value of predicted L1-RSRP differences, a cumulative distribution function of the predicted L1-RSRP differences, a ratio of the predicted L1-RSRP difference being less than or equal to the second threshold, or a ratio of the predicted L1-RSRP difference being greater than the third threshold, and the predicted L1-RSRP difference is a difference between the predicted L1-RSRP of the best predicted beam or the best predicted beam pair and the measured L1-RSRP of the best predicted beam or the best predicted beam pair;
terminal throughput;
reference signal overhead;
uplink control information overhead;
prediction delay;
prediction accuracy for beam failure probability;
a difference degree for radio link quality prediction;
a difference degree for BLER prediction;
prediction accuracy for beam failure time; or
prediction accuracy for a new beam.

36. The method according to claim 35, wherein the performance value comprises at least one of:
accuracy of the predicted beam or the predicted beam pair;
prediction accuracy of the beam or the beam pair for which the L1-RSRP difference is within the first threshold;
a first L1-RSRP difference degree, wherein the first L1-RSRP difference degree is a difference degree between the measured L1-RSRP of the best predicted beam or the best predicted beam pair and the measured L1-RSRP of the measured best beam or the measured best beam pair;
a second L1-RSRP difference degree, wherein the second L1-RSRP difference degree is a difference degree between the predicted L1-RSRP of the best predicted beam or the best predicted beam pair and the measured L1-RSRP of the best predicted beam or the best predicted beam pair;
throughput used by the terminal to determine the performance value;
reference signal overhead for determining the performance value;
uplink control information overhead for determining the performance value;
prediction delay for obtaining the prediction data;
the prediction accuracy for beam failure probability;
the difference degree for radio link quality prediction, wherein the difference degree for radio link quality prediction is a difference degree between predicted radio link quality and measured radio link quality;
the difference degree for BLER prediction, wherein the difference degree for BLER prediction is a difference degree between a predicted BLER and a measured BLER;
the prediction accuracy for beam failure time; or
the prediction accuracy for the new beam.

37. The method according to claim 35 or 36, wherein the first threshold comprises at least one of:
a first accuracy threshold;
a second accuracy threshold;
a first difference degree threshold;
a second difference degree threshold;
a first throughput threshold;
a first overhead threshold;
a second overhead threshold;
a first delay threshold;
a third accuracy threshold;
a third difference degree threshold;
a fourth difference degree threshold;
a fourth accuracy threshold; or
a fifth accuracy threshold.

38. The method according to claim 37, wherein the first event comprises at least one of:
accuracy of a predicted beam or a predicted beam pair being greater than the first accuracy threshold;
prediction accuracy of the beam or the beam pair for which the L1-RSRP difference is within the first threshold being greater than the second accuracy threshold;
the first L1-RSRP difference degree being less than the first difference degree threshold;
the second L1-RSRP difference degree being less than the second difference degree threshold;
the throughput being greater than the first throughput threshold;
the reference signal overhead being less than the first overhead threshold;
the uplink control information overhead being less than the second overhead threshold;
the prediction delay being less than the first delay threshold;
the prediction accuracy for beam failure probability being greater than the third accuracy threshold;
the difference degree for radio link quality being less than the third difference degree threshold;
the difference degree for BLER prediction being less than the fourth difference degree threshold;
the prediction accuracy for beam failure time being greater than the fourth accuracy threshold; or
the prediction accuracy for the new beam being greater than the fifth accuracy threshold.

39. The method according to claim 38, further comprising:
determining to activate the second model based on the performance monitoring report; and
activating the second model, or sending an activation command to the terminal, wherein the activation command is used by the terminal to activate the second model.

40. The method according to any one of claims 30 to 39, wherein
the first model and/or the second model is deployed on the terminal, or the first model and/or the second model is deployed on the network device.

41. The method according to any one of claims 30 to 40, further comprising:
receiving capability indication information sent by the terminal, wherein the capability indication information indicates at least one of:
whether the terminal supports the first model and/or the second model;
whether the terminal supports performance monitoring of an inactive model deployed on the terminal; or
whether the terminal supports performance monitoring of the inactive model deployed on the network device.

42. A terminal, comprising:
a transceiver module, configured to receive first information sent by a network device, wherein the first information is configured to determine performance monitoring of a first model.

43. A network device, comprising:
a transceiver module, configured to send first information to a terminal, wherein the first information is configured to determine performance monitoring of a first model.

44. A terminal, comprising:
one or more processors,
wherein the terminal is configured to implement the method according to any one of claims 1 to 22.

45. A network device, comprising:
one or more processors,
wherein the network device is configured to implement the method according to any one of claims 23 to 41.

46. A storage medium storing instructions, wherein the instructions, when executed on a terminal, cause the terminal to implement the method according to any one of claims 1 to 22, or when executed on a network device, cause the network device to implement the method according to any one of claims 23 to 41.
